# EUROPEAN PATENT SPECIFICATION

(11) **EP 3 411 753 B1**
(45) Date of publication and mention of the grant of the patent: **01.12.2021**
(21) Application number: 17868493.2
(22) Date of filing: 31.10.2017
(51) Int. Cl.: G02F 1/1362

(54) **DISPLAY SUBSTRATE, MANUFACTURING METHOD THEREOF, AND DISPLAY PANEL**
ANZEIGESUBSTRAT, HERSTELLUNGSVERFAHREN DAFÜR UND ANZEIGETAFEL
SUBSTRAT D'AFFICHAGE, SON PROCÉDÉ DE FABRICATION, ET PANNEAU D'AFFICHAGE

(30) Priority: 31.03.2017 CN 201710212461
(43) Date of publication of application: 12.12.2018
(73) Proprietor: BOE Technology Group Co., Ltd., Beijing 100015 (CN); Chengdu BOE Optoelectronics Technology Co., Ltd., Chengdu, Sichuan 611731 (CN)
(72) Inventor: WANG, Yang, Beijing 100176 (CN); LIU, Tingliang, Beijing 100176 (CN); HUANG, Weiyun, Beijing 100176 (CN); GAO, Shan, Beijing 100176 (CN); XU, Yuanjie, Beijing 100176 (CN); ZANG, Pengcheng, Beijing 100176 (CN); CAO, Zhonglin, Beijing 100176 (CN)
(74) Representative: Isarpatent
(86) International application number: PCT/CN2017/108566
(87) International publication number: WO 2018/176833

(56) References cited:
- EP-A1- 1 992 983
- CN-A- 101 408 687
- CN-A- 103 698 946
- CN-A- 103 941 459
- CN-A- 103 941 504
- CN-A- 105 161 506
- CN-A- 105 161 506
- CN-A- 106 959 561
- CN-A- 106 959 561
- US-A- 5 179 460
- US-A1- 2012 327 355
- US-A1- 2015 168 752
- US-B1- 6 636 192

## Description

### TECHNICAL FIELD

The present disclosure relates generally to the field of display technologies, and specifically to a display substrate, its manufacturing method, and a display panel.

### BACKGROUND

Because of the advantages such as small sizes, low energy consumption, no radiation, and low manufacturing cost, thin-film transistor liquid crystal displays (TFT-LCDs) have been widely applied in various fields, including the field of vehicle-mounted display.

In a vehicle-mounted display, the liquid crystal display panel typically includes a display substrate (also known as thin-film transistor panel), and an encasing substrate (sometimes known as the color filter substrate). Usually the display substrate is provided with one or more conductive adhesive coating portions configured to provide regions for coating a conductive adhesive (e.g., a silver paste) thereupon, and the encasing substrate is equipped with a coupling portion, which may include an anti-static sub-portion configured to collect and guide out the static electricity that is accumulated in the encasing substrate.

US 2017/0351150 A1 provides an array substrate and a fabrication method thereof, and a display device. The array substrate includes a base substrate and a peripheral lead, a ground signal terminal, a conductive adhesive, and a barrier wall structure located on the base substrate, wherein the conductive adhesive is connected with the ground signal terminal, and the barrier wall structure is located between the peripheral lead and the ground signal terminal and configured for blocking the conductive adhesive from diffusing toward the peripheral lead.

US 2012/0327355 A1 provides a LCD panel including an active device array substrate, an opposite substrate, a liquid crystal layer, a conductive sealant and restraining elements. The active device array substrate includes common lines, transfer pads and a dielectric layer. The dielectric layer has openings exposing the transfer pads. The opposite substrate has a common electrode. The liquid crystal layer and the conductive sealant are disposed between the active device array substrate and the opposite substrate. The conductive sealant surrounds the liquid crystal layer. The openings are corresponding to corners of the conductive sealant. The conductive sealant fills the openings and the common electrode is electrically connected to the transfer pads through the conductive sealant. Further, the restraining elements are between the active device array substrate and the opposite substrate and are distributed around the corners of the conductive sealant such that the conductive sealant is forced to fill into the openings.

CN 105161506 A discloses an array substrate, a fabrication method thereof, and a display device, which can prevent conductive adhesive from flowing from a cut and broken part of a color filter substrate inwardly into a peripheral lead of an array substrate after the array substrate and the color filter substrate are aligned to form a cell. The two-part form is based on this document.

US 2015/0168752 A1 discloses a structure to prevent an alignment liquid from being spread to the sealant so as to affect the adhesion of the sealant.

### SUMMARY

The present disclosure provides a display substrate, a method for manufacturing a display panel, and a display panel including the display substrate, as defined in the appended claims. Hereinafter, before coming to a detailed description of the embodiments of the present invention with reference to the attached drawings, some aspects of the invention which contribute to the understanding of the invention are listed separately. However, it should be noted that the invention is defined by the attached claims, and any examples and embodiments not covered by these claims are also to be understood as aspects contributing to the understanding of the invention.

In a first aspect, a display substrate according to claim 1 is disclosed. The display substrate includes a substrate, a first portion, a second portion, and a protruding portion. The first portion, the second portion, and the protruding portion are disposed over an upper surface of the substrate.

The first portion is configured to coat a conductive adhesive thereon for attachment, and for electric coupling, of the display substrate with an encasing substrate. The second portion includes at least one wiring. The protruding portion is disposed between the first portion and the second portion, and is configured to prevent the conductive adhesive coated on the first portion from spreading to the second portion.

In a second aspect, the disclosure further provides a display panel according to claim 7. The display panel comprises an encasing substrate and a display substrate according to claims 1-6.

The encasing substrate is assembled with the display substrate, and is electrically coupled with the display substrate via the conductive adhesive coated onto the first portion of the display substrate.

In the display panel, the first portion on the display substrate can include two conductive adhesive coating sub-portions, and the two conductive adhesive coating sub-portions can be disposed respectively at two ends of a diagonal line on the display substrate.

In the display panel, the encasing substrate can be provided with a coupling portion, which is configured to be electrically coupled with the first portion on the display substrate via the conductive adhesive. The coupling portion can include an anti-static sub-portion, which comprises a transparent conductive film, disposed on a side of the encasing substrate far away from the display substrate.

In any of the display panel as described above, the conductive adhesive can be a silver paste.

In a third aspect, the disclosure further provides a method for manufacturing a display according to claim 11. The method includes a step of forming a first portion, a second portion, and a protruding portion over an upper surface of a substrate. The first portion is configured to coat a conductive adhesive thereon for attachment, and for electric coupling, of the display substrate with an encasing substrate. The second portion comprises at least one wiring. The protruding portion is disposed between the first portion and the second portion, and is configured to prevent the conductive adhesive coated on the first portion from spreading to the second portion.

Other embodiments may become obvious in light of the aforementioned display substrate, the manufacturing method thereof, and the display panel.

### BRIEF DESCRIPTION OF THE DRAWINGS

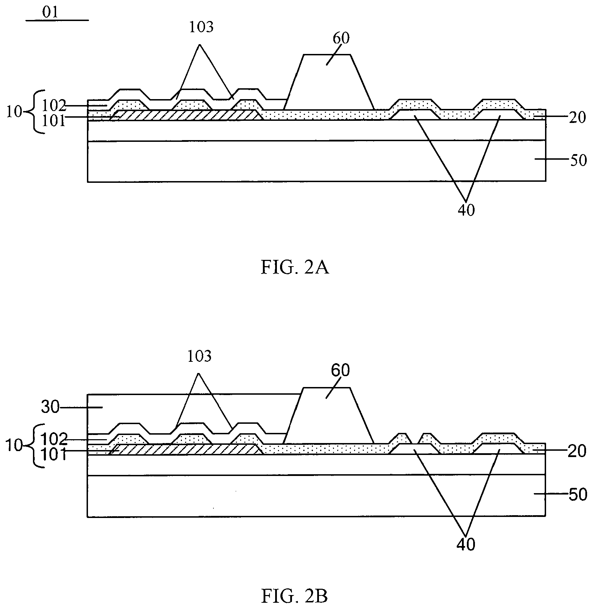

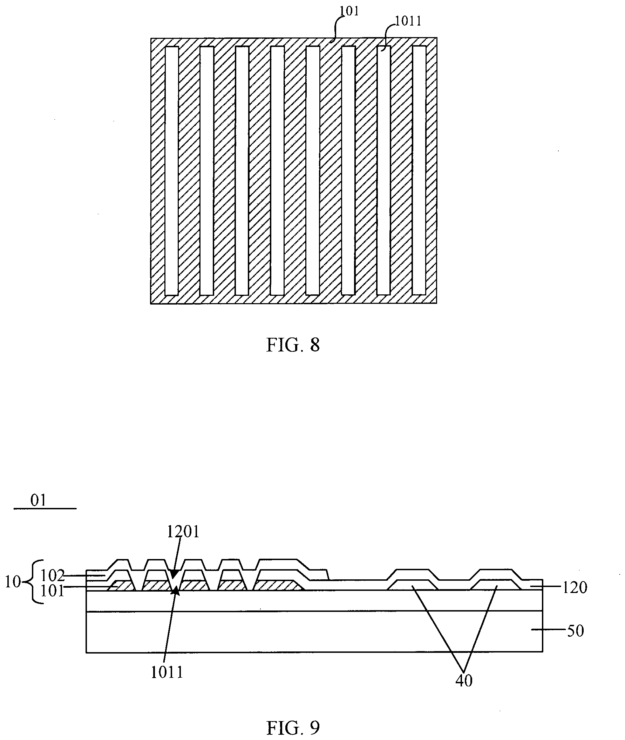

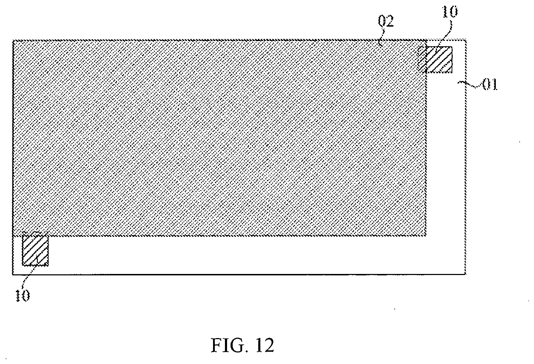

To more clearly illustrate some of the embodiments disclosed herein, the following is a brief description of the drawings. The drawings in the following descriptions are only illustrative of some embodiments. For those of ordinary skill in the art, other drawings of other embodiments can become apparent based on these drawings. Fig. 9-11 and corresponding eighth to tenth embodiments represent embodiments according to the invention. Fig. 2A-8 and corresponding first to seventh embodiments represent embodiments not according to the invention. Fig. 12 and the corresponding description are according to the invention when the display substrate 01 is according to the eighth to tenth embodiments.
FIG. 1 illustrates a structural diagram of a non-display area having a conductive adhesive coating portion and a wiring region in a conventional display substrate;
FIG. 2A is a schematic diagram of a non-display area of a display substrate according to a first embodiment of the present disclosure;
FIG. 2B illustrates the display substrate as shown in FIG. 2A, where the conductive adhesive is applied onto the conductive adhesive coating portion and there are ruptures and perforations in the passivation layer;
FIG. 3A is a schematic diagram of a non-display area of a display substrate according to a second embodiment of the present disclosure;
FIG. 3B illustrates the display substrate as shown in FIG. 3A, where the conductive adhesive is applied onto the conductive adhesive coating portion and there are ruptures and perforations in the passivation layer;
FIG. 4A is a schematic diagram of a display area of a display substrate according to a third embodiment of the present disclosure;
FIG. 4B is a schematic diagram of a non-display area of the display substrate as mentioned in FIG. 4A;
FIG. 5A is a schematic diagram of a display area of a display substrate according to a fourth embodiment of the present disclosure;
FIG. 5B is a schematic diagram of a non-display area of the display substrate as mentioned in FIG. 5A;
FIG. 6A is a schematic diagram of a non-display area of a display substrate according to a fifth embodiment of the present disclosure;
FIG. 6B is a schematic diagram of a non-display area of a display substrate according to a sixth embodiment of the present disclosure;
FIG. 7A is a schematic diagram of a non-display area of a display substrate according to a seventh embodiment of the present disclosure;
FIG. 7B illustrates the display substrate as shown in FIG. 7A, where the conductive adhesive is applied onto the conductive adhesive coating portion and there are ruptures and perforations in the passivation layer;
FIG. 8 is a top view of the metal patterned layer of the conductive adhesive coating portion in the display substrate as shown in FIG. 7A;
FIG. 9 is a schematic diagram of a non-display area of a display substrate according to an eighth embodiment of the present disclosure;
FIG. 10 is a schematic diagram of a non-display area of a display substrate according to a ninth embodiment of the present disclosure;
FIG. 11 is a schematic diagram of a non-display area of a display substrate according to a tenth embodiment of the present disclosure;
FIG. 12 is a top view of a display panel according to some embodiments of the present disclosure.

### DETAILED DESCRIPTION

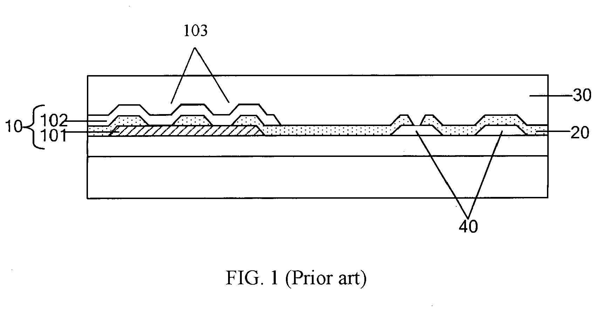

FIG. 1 illustrates one conventional conductive adhesive coating portion according to an existing technology. As shown in FIG. 1, the conductive adhesive coating portion 10 comprises a metal patterned layer 101 and a transparent conductive patterned layer 102. The transparent conductive patterned layer 102 is disposed on an outer surface (i.e. an upper surface as shown in FIG. 1) of the display substrate, and is electrically connected with the metal patterned layer 101 through vias 103 arranged on a passivation layer 20 that is sandwiched between the metal patterned layer 101 and the transparent conductive patterned layer 102.

In a conductive adhesive coating process (also known as a silver dotting process if a silver paste is used as a conductive adhesive 30) in which the conductive adhesive 30 is applied on a top surface of the conductive adhesive coating portion 10 to thereby allow the attachment of the display substrate and the encasing substrate, while at the same time to realize an electrical connection between the coupling portion (e.g. anti-static sub-portion) of the encasing substrate and a common electrode of the display substrate through the conductive adhesive 30 and the conductive adhesive coating portions 10.

Because the conductive adhesive coating portion is electrically connected to a grounding wire (such as a common electrode?), the static electricity accumulated in the encasing substrate can be guided out by means of the electrical connection through the conductive adhesive and the conductive adhesive coating portion. As such the reliability of the vehicle-mounted display can be effectively increased.

However, during a conventional conductive adhesive coating process, because the conductive adhesive 30 employed for coating the conductive adhesive coating portion 10 usually has a certain level of fluidity, the conductive adhesive 30 can occasionally spread to a wiring region (i.e. a region of the display substrate having wirings 40 disposed therein, as illustrated in FIG. 1) in the proximity of the conductive adhesive coating portion 10.

Because of the environment where the vehicle-mounted displays are applied, rupture and perforation occasionally occur on the passivation layer 20 during use, transportation, and/or reliability tests of the vehicle-mounted displays. Consequently, short circuiting can occasionally happen due to the contact of the conductive adhesive 30 with the wirings 40 that are exposed because of the ruptures and perforations in the passivation layer 20, in turn leading to a poor display effect.

In the following, with reference to the drawings of various embodiments disclosed herein, the technical solutions of the embodiments will be described in a clear and fully understandable way.

In one aspect, the present disclosure provides a display substrate.

The display substrate comprises a substrate, a first portion, a second portion, and a protruding portion. The first portion, the second portion, and the protruding portion are disposed over an upper surface of the substrate.

The first portion is configured to coat a conductive adhesive thereon for attachment, and for electric coupling, of the display substrate with an encasing substrate. The second portion includes at least one wiring. The protruding portion is disposed between the first portion and the second portion, and is configured to prevent the conductive adhesive coated on the first portion from spreading to the second portion.

Herein any of the first portion, the second portion, and the protruding portion can be disposed directly on an upper surface of the substrate, but can also be disposed to have a distance to the upper surface of the substrate.

It is noted that throughout the disclosure, the terms "upper surface" and "lower surface" are relative terms that are respectively referred to as one and another of the two opposing surfaces of an object, and are relative to the viewing angle of the object that is illustrated in the drawings, but do not impose any special or positional limitations.

FIG. 2A shows a non-display area of a display substrate according to a first embodiment which is not according to the invention. The embodiments derived from the first embodiment and mentioned hereinafter are also not according to the invention.

As illustrated in FIG. 2A, in the non-display area, this first embodiment of the display substrate 01 includes a conductive adhesive coating portion 10, and at least one wiring 40. The conductive adhesive coating portion 10 is configured to provide a coating region for a conductive adhesive to allow a subsequent attachment of the display substrate with an encasing substrate. The at least one wiring 40 is located in a wiring region (i.e. the region in the display substrate 01 that has the at least one wiring 40 disposed therein).

As shown in FIG. 2A, the display substrate 01 further includes a protruding portion 60, which is disposed between the conductive adhesive coating portion 10 and one of the at least one wiring 40 that is closest to the conductive adhesive coating portion 10.

The protruding portion 50 is configured to have a larger height from a reference surface than the conductive adhesive coating portion 10. Herein the reference surface is referred to an upper surface of the substrate 50, and the upper surface of the substrate 50 is referred to as a surface of the substrate 50 on which the conductive adhesive coating portion 10 and at least one wiring 40 are disposed.

The height of the protruding portion 50/conductive adhesive coating portion 10 is defined as a distance between an upper surface of the protruding portion 50/conductive adhesive coating portion 10 from the reference surface. An upper surface of the protruding portion 50/conductive adhesive coating portion 10 is referred to as a surface thereof that is farthest away from the upper surface of the substrate 50.

The protruding portion 60 is configured to separate the conductive adhesive coating portion 10 with the at least one wiring 40 to thereby block the conductive adhesive 30 from spreading to the wiring region during a conductive adhesive coating process (the display substrate 01 having the conductive adhesive coating portion 10 coated with the conductive adhesive 30 is illustrated in FIG. 2B).

Because of the separation and block of the protruding portion 60, it is difficult for the conductive adhesive 30 to spread to the wiring region. As such, as illustrated in FIG. 2B, if rupture and/or perforation occurs in the passivation layer 20, because there is no conductive adhesive 30 in the wiring region to electrically connect the wirings 40 in the wiring region through the ruptures and/or the perforations in the passivation layer 20, the issue of short circuiting can be effectively avoided.

The following are noted for the embodiments of the display substrate 01 as described above.

First, as known by people of ordinary skill in the field, the conductive adhesive coating process is performed only when it is needed for the display substrate and the encasing substrate to align together for encasing (or attachment), when the conductive adhesive 30 is coated onto a top surface of the conductive adhesive coating portion 10 of the display substrate. To provide an anti-static function, the conductive adhesive coating portion 10 is further configured to be electrically connected to a grounding wiring on the display substrate 01.

Second, more than one conductive adhesive coating portions 10 can be employed. The number of the conductive adhesive coating portion 10 can be chosen based on a size of the display panel having the display substrate 01.

If the display panel is small, only one conductive adhesive coating portion 10 is needed; and if the display panel is relatively big-sized, two or more conductive adhesive coating portions 10 can be employed to allow a sufficient grounding for the anti-static sub-portion on the encasing substrate. For example, two conductive adhesive coating portions 10 can be configured on the display substrate of a vehicle-mounted display panel.

It is noted that regardless of how many conductive adhesive coating portions 10 that are employed in the display substrate, all the conductive adhesive coating portions 10 and the at least one wiring 40 shall be arranged in a non-display area of the substrate 50.

Third, the protruding portion 60 can have any shape or structure as long as it can block the spreading of the conductive adhesive 30 during the conductive adhesive coating process.

In the display substrate 01 as shown in FIG. 2A and FIG. 2B, the conductive adhesive coating portion 10 includes a metal patterned layer 101, a transparent conductive patterned layer 102, and a passivation layer 20.

The metal patterned layer 101 and the transparent conductive patterned layer 102 are disposed consecutively over the upper surface of the substrate 50, and the passivation layer 20 is sandwiched between, and configured to insulate, the metal patterned layer 10 and the transparent conductive patterned layer 102. The passivation layer 20 is provided with at least one via 103, and the metal patterned layer 101 and the transparent conductive patterned layer 102 are electrically connected to each other through the at least one via in the passivation layer 20.

It is noted that the display substrate 01 as shown in FIG. 2A and FIG. 2B serve only as one illustrating embodiment and does not impose a limitation to the scope of the disclosure. There are other embodiments based on practical needs.

According to some embodiments of the present disclosure, an insulating layer other than the passivation layer 20 in the embodiment as illustrated in FIG. 2A and FIG. 2B can be arranged between the transparent conductive patterned layer 102 and the metal patterned layer 101. Herein the insulating layer can be an interlayer insulating layer or a gate insulating layer.

Similar to the embodiment as illustrated in FIG. 2A and FIG. 2B, the transparent conductive patterned layer 102 and the metal patterned layer 101 in these embodiments can be electrically connected through at least one via that is arranged in the insulating layer.

In some embodiments of the display substrate, a gate insulating layer is arranged between the transparent conductive patterned layer 102 and the metal patterned layer 101, and the transparent conductive patterned layer 102 and the metal patterned layer 101 are electrically connected through at least one via arranged in the gate insulating layer.

In yet some other embodiments of the display substrate, an interlayer insulating layer is arranged between the transparent conductive patterned layer 102 and the metal patterned layer 101, and the transparent conductive patterned layer 102 and the metal patterned layer 101 are electrically connected through at least one via arranged in the interlayer insulating layer.

It is possible that more than one insulating layers are disposed between the transparent conductive patterned layer 102 and the metal patterned layer 101, with at least one vias arranged to run through the more than one insulating layers to thereby allow an electric connection between the transparent conductive patterned layer 102 and the metal patterned layer 101. Herein each of the more than one insulating layers can be selected from a passivation layer 20, a gate insulating layer, and an interlayer insulating layer.

It is further noted that regardless of the employment of one or more of a passivation layer 20, a gate insulating layer, or an interlayer insulating layer that are disposed between the transparent conductive patterned layer 102 and the metal patterned layer 101 in the display substrate, each of the passivation layer 20, the gate insulating layer, and the interlayer insulating layer is essentially an insulating layer which is formed by coating over the substrate 50.

As such, in the manufacturing of the display substrate, the at least one via that runs through one or more insulating layers to thereby provide a means for electrically connecting the transparent conductive patterned layer 102 and the metal patterned layer 101 in the display substrate can be formed through one or more patterning processes over each of the one or more insulating layers.

In any of the embodiments of the display substrate 01 as described above, by configuring a protruding portion 60 between a conductive adhesive coating portion 10 and one wiring 40 that is closest thereto (i.e. the wiring 40 that is closest to the conductive adhesive coating portion 10), because of the block by the protruding portion 60, it is difficult for the conductive adhesive 30 to spread to the wiring region (i.e., a region on the display substrate having the at least one wire 40) in the proximity of the conductive adhesive coating portion 10 when the conductive adhesive 30 is applied onto the conductive adhesive coating portion 10 in a conductive adhesive coating process.

As such, the above mentioned issue of short circuiting among the conductive adhesive coating portion 10 and the at least one wiring 40 in the wiring region in the proximity of the conductive adhesive coating portion 10 can be effectively avoided.

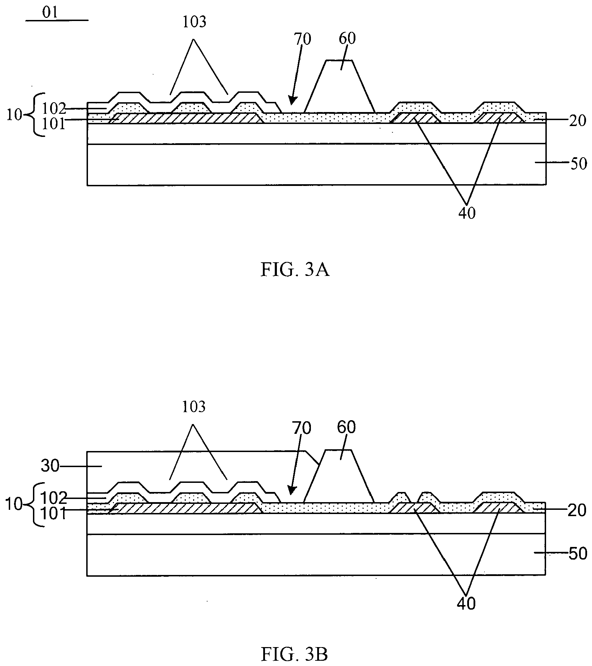

FIG. 3A illustrates a non-display area of a display substrate according to a second embodiment which is not according to the invention. The embodiments derived from the second embodiment and mentioned hereinafter are also not according to the invention. As illustrated in FIG. 3A, the non-display area of this second embodiment of the display substrate is further provided with a depression 70, which is arranged between each conductive adhesive coating portion 10 and a protruding portion 60 corresponding thereto (i.e. the protruding portion 60 closest to the each conductive adhesive coating portion 10). The depression 70 is configured such that a bottom surface thereof has a shorter distance to the upper surface of the substrate 50 than an upper surface of the each conductive adhesive coating portion 10.

Herein the bottom surface of the depression 70 is referred to as a surface thereof that is closest to the upper surface of the substrate 50, which can also be considered as a bottom surface of the depression 70, and the upper surface of the substrate 50 has been defined above whose description is skipped.

It is noted that the depression 70 can be a groove structure formed on a surface of the display substrate, or can be substantially a gap between two portions, such as between the each conductive adhesive coating portion 10 and a protruding portion 60 that are formed on the upper surface of the substrate 50.

As shown in FIG. 3B, if rupture and/or perforation occurs in the passivation layer 20 after the conductive adhesive coating process, because of the relatively large distance between the upper surface of the protruding portion 60 and the bottom surface of the depression 70, it increases the level of difficulty for the conductive adhesive 30 to go beyond the protruding portion 60 to thereby electrically connect with the at least one wiring 40 through the ruptures and/or the perforations in the passivation layer 20.

It is noted that the display substrate as shown in FIG. 3A and FIG. 3B, wherein each conductive adhesive coating portion 10 includes a metal patterned layer 101 and a transparent conductive patterned layer 102, and the metal patterned layer 101 and the transparent conductive patterned layer 102 are electrically connected through the vias in the passivation layer 20, serve only as an illustrating embodiment and does not impose a limitation to the scope of the disclosure. Other embodiments that are based on practical needs are also possible.

In the embodiments of the display substrate 01 as described above and illustrated in FIG. 3A and FIG. 3B, a depression 70 and a protruding portion 60 are arranged between each conductive adhesive coating portion 10 and one wiring 40 that is closest to the each conductive adhesive coating portion 10, with the depression 70 arranged between the each conductive adhesive coating portion 10 and the protruding portion 60. As such, it is substantially configured such that a depression 70 and a protrusion are arranged between the each conductive adhesive coating portion 10 and the one wiring 40 that is closest to the each conductive adhesive coating portion 10.

Because of the relatively large distance between the upper surface of the protruding portion 60 and the bottom surface of the depression 70, compared with the embodiments of the display substrate 01 where only a protruding portion 60 is arranged between each conductive adhesive coating portion 10 and one wiring 40 that is closest to the each conductive adhesive coating portion 10, it further increases the level of difficulty for the conductive adhesive 30 to go beyond the protruding portion 60 to electrically connect with the at least one wiring 40 through the ruptures and/or the perforations in the passivation layer 20.

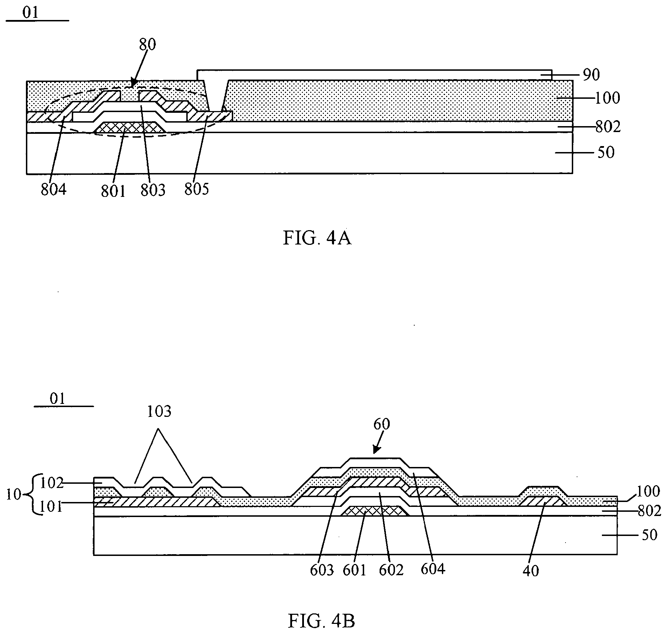

FIG. 4A is a schematic diagram of a display area of a display substrate according to a third embodiment which is not according to the invention. The embodiments derived from the third embodiment and mentioned hereinafter are also not according to the invention. As illustrated in FIG. 4A, this third embodiment of the display substrate 01 can further comprise a thin-film transistor 80 and a pixel electrode 90, disposed over the substrate 50 and in a display area of the display substrate 01. The thin-film transistor 80 comprises a gate electrode 801, a gate insulating layer 802, an active layer 803, a source electrode 804, and a drain electrode 805.

On the above basis, the protruding portion 60 can comprise more than one patterned layers according to some embodiments of the present disclosure. In these embodiments, one or more of the patterned layers in the protruding portion 60 can be configured to be at a substantially same layer as the gate electrode 801, and/or the active layer 803, and/or the source electrode 804 and a drain electrode 805, and/or the pixel electrode 90.

As such, because one or more of the patterned layers in the protruding portion 60 and one or more patterned layers in the thin-film transistor 80 and the pixel electrode 90 are at substantially same layer(s), during the manufacturing process, at least the one or more of the patterned layers in the protruding portion 60 can be formed at the same time when the one or more patterned layers in the thin-film transistor 80 and the pixel electrode 90 that are at the same layer(s) are fabricated. Therefore, it leads to a simplified manufacturing process for the display substrate and the display panel containing the display substrate as disclosed herein.

It is further noted that one or more of the patterned layers in the protruding portion 60 and one or more patterned layers in the thin-film transistor 80 and the pixel electrode 90 that are at substantially same layer(s) can have a substantially same composition, which can lead to an even more simplified manufacturing process.

Among the various patterned layers in the thin-film transistor 80, the gate insulating layer 802 is formed by coating over the substrate 50, thus the gate insulating layer 802 can be retained in the protruding portion 60. As such, the gate insulating layer 802 can constitute one patterned layer in the protruding portion 60.

On this above basis, the protruding portion 60 can further include a first patterned layer that is at a substantially same layer as the gate electrode 801, and/or a second patterned layer that is at a substantially same layer as the active layer 803, and/or a third patterned layer that is at a substantially same layer as the source electrode 804 and the drain electrode 805, and/or a fourth patterned layer that is at a substantially same layer as the pixel electrode 90.

Additionally, an interlayer insulating layer can be formed by coating over the substrate 50 during the formation of the thin-film transistor 80 and the pixel electrode 90, thus the protruding portion 60 can further include an interlayer insulating layer. Herein there is no limitation to the position of the interlayer insulating layer, which can be arranged between any two electrodes to be insulated based on practical needs.

As illustrated in FIG. 4A, the display substrate 01 further comprises a thin-film transistor 80 and a pixel electrode 90, which are consecutively disposed in a display area over the substrate 50. The thin-film transistor 80 comprises a gate electrode 801, a gate insulating layer 802, an active layer 803, a source electrode 804 and a drain electrode 805, which are consecutively disposed over the substrate 50. The drain electrode 805 is electrically connected with a pixel electrode 90 through vias in an interlayer insulating layer 100. The gate insulating layer 802 and the interlayer insulating layer 100 are both configured to coat over the substrate 50.

On the above structural basis of the thin-film transistor 80 and a pixel electrode 90 as shown in FIG. 4A, the protruding portion 60 further comprises, in addition to the gate insulating layer 802 and the interlayer insulating layer 100, a first patterned layer 601 that is at a substantially same layer as the gate electrode 801, a second patterned layer 602 that is at a substantially same layer as the active layer 803, a third patterned layer 603 that is at a substantially same layer as the source electrode 804 and the drain electrode 805, and a fourth patterned layer 604 that is at a substantially same layer as the pixel electrode 90, as illustrated in FIG. 4B.

Further as illustrated in FIG. 4B, the conductive adhesive coating portion 10 includes a metal patterned layer 101 and a transparent conductive patterned layer 102, wherein the metal patterned layer 101 is at a substantially same layer as the source electrode 804 and the drain electrode 805, as well as the third patterned layer 603 in the protruding portion 60. The transparent conductive patterned layer 102 is at a substantially same layer as the pixel electrode 90, as well as the fourth patterned layer 604 in the protruding portion 60.

Further as illustrated in FIG. 4B, a wiring 40 is at a substantially same layer as the source electrode 804 and the drain electrode 805, as the third patterned layer 603 in the protruding portion 60, and as the transparent conductive patterned layer 102 in the conductive adhesive coating portion 10.

It is noted that there is no limitation to the type of the thin-film transistor 80, which can be an amorphous silicon thin-film transistor, a metal oxide thin-film transistor, a polycrystalline silicon thin-film transistor, or an organic thin-film transistor, etc.

In addition, there is no limitation to the configuration of the film transistor 80, which can be of a bottom-gate type or can be of a top-gate type. Only a bottom-gate thin-film transistor is shown in FIG. 4A as an illustrated example.

In the embodiments of the display substrate 01 as described above and illustrated in FIG. 4A and FIG. 4B, because one or more of the patterned layers in the protruding portion 60, one or more patterned layers in the conductive adhesive coating portion 10, and one or more patterned layers in the thin-film transistor 80 and the pixel electrode 90 are all at substantially same layer(s), these one or more patterned layers can be formed at the same time through a one-time patterning process.

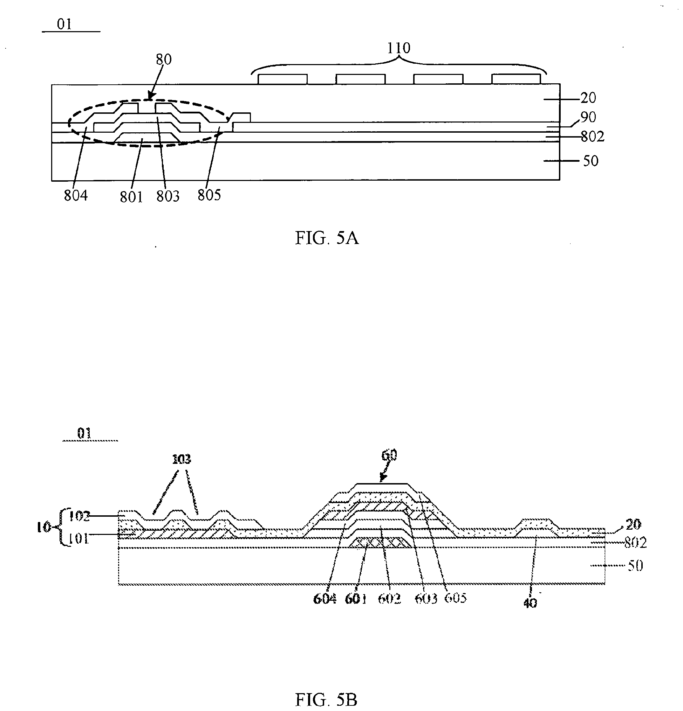

FIG. 5A is a schematic diagram of a display area of a display substrate according to a fourth embodiment which is not according to the invention. The embodiments derived from the fourth embodiment and mentioned hereinafter are also not according to the invention. As illustrated in FIG. 5A, in addition to a thin-film transistor 80 and a pixel electrode 90, this fourth embodiment of the display substrate 01 can further include at least one common electrode 110 and a passivation layer 20.

On the above basis, the protruding portion 60 can include a plurality of patterned layers, wherein one or more of the plurality of patterned layers are configured to be at a substantially same layer as the gate electrode 801, the active layer 803, the source electrode 804 and the drain electrode 805, the pixel electrode 90, or the at least one common electrode 110.

As such, during the formation of the thin-film transistor 80, the pixel electrode 90, the common electrode 110, and the passivation layer 20, one or more of the plurality of patterned layers in the protruding portion 60 can be formed at the same time by least one one-time patterning process.

In the embodiments of the display substrate 01 as described above, because the gate insulating layer 802 of the thin-film transistor and the passivation layer 20 are formed by coating over the substrate 50, the gate insulating layer 802 and the passivation layer 20 can be retained in the protruding portion 60. As such, the gate insulating layer 802 and the passivation layer 20 can constitute two patterned layers in the protruding portion 60.

On the above basis, the protruding portion 60 can further include at least one of a first patterned layer 601 that is at a substantially same layer as the gate electrode 801, a second patterned layer 602 that is at a substantially same layer as the active layer 803, a third patterned layer 603 that is at a substantially same layer as the source electrode 804 and the drain electrode 805, a fourth patterned layer 604 that is at a substantially same layer as the pixel electrode 90, or a fifth patterned layer 605 that is at a substantially same layer as the at least one common electrode 110.

In the embodiments of the display substrate 01 as illustrated in FIG. 5A, the display substrate 01 comprises a thin-film transistor 80, a pixel electrode 90, a passivation layer 20, and at least one common electrode 110, which are consecutively disposed over the substrate 50 in a display area.

The thin-film transistor 80 comprises a gate electrode 801, a gate insulating layer 802, an active layer 803, a source electrode 804 and a drain electrode 805, which are consecutively disposed over the substrate 50. The pixel electrode 90 is disposed at a lateral side of the drain electrode 805 that is close to the substrate 50, and the pixel electrode 90 is directly in contact with the drain electrode 805.

The passivation layer 20 and the common electrodes 110 are disposed over a top surface of the source electrode 804 and the drain electrode 805 that is far away from the substrate 50. The gate insulating layer 802 and the passivation layer 20 are disposed to coat over the whole substrate 50.

In the embodiments as illustrated in FIG. 5B, in addition to the gate insulating layer 802 and the passivation layer 20, the protruding portion 60 further includes a first patterned layer 601 that is at a substantially same layer as the gate electrode 801, a second patterned layer 602 that is at a substantially same layer as the active layer 803, a third patterned layer 603 that is at a substantially same layer as the source electrode 804 and the drain electrode 805, a fourth patterned layer 604 that is at a substantially same layer as the pixel electrode 90, and a fifth patterned layer 605 that is at a substantially same layer as the common electrode 110.

Further as illustrated in FIG. 5B, a conductive adhesive coating portion 10 includes a metal patterned layer 101 and a transparent conductive patterned layer 102, wherein the metal patterned layer 101 is at a substantially same layer as the source electrode 804 and the drain electrode 805, and as well as the third patterned layer 603 in the protruding portion 60. The transparent conductive patterned layer 102 is at a substantially same layer as the common electrode 110 and the fifth patterned layer 605 in the protruding portion 60.

Further as illustrated in FIG. 5B, a wiring 40 is at a substantially same layer as the source electrode 804 and the drain electrode 805 in the thin-film transistor 80, as the third patterned layer 603 in the protruding portion 60, and as the metal patterned layer 101 in the conductive adhesive coating portion 10.

The configurations as mentioned above and illustrated in FIGS. 4A, 4B, 5A, and 5B can avoid the addition of extra patterning processes and can increase the height of the protruding portion 60. In one specific embodiment as an illustrating example, the protruding portion 60 having one of the above mentioned configurations can have a height difference of more than 1.9 µm between the protruding portion 60 and the conductive adhesive coating portions 10. Herein the height difference between the protruding portion 60 and the conductive adhesive coating portions 10 is referred to as a distance between an upper surface of the protruding portion 60 and an upper surface of the conductive adhesive coating portion 10.

It is noted that the metal patterned layer 101 can be configured to be at a substantially same layer as the source electrode 804 and the drain electrode 805, or configured to be at a substantially same layer as the gate electrode 801. Alternatively, the metal patterned layer 101 can include two sub-layers, with a first sub-layer at a substantially same layer as the source electrode 804 and the drain electrode 805, and with a second sub-layer at a substantially same layer as the gate electrode 801.

It is further noted that the transparent conductive patterned layer 102 in the conductive adhesive coating portion 10 can be configured to be at a substantially same layer as the common electrode 110, or can be configured to be at a substantially same layer as the pixel electrode 90. Alternatively, the transparent conductive patterned layer 102 can include two sub-layers, with one sub-layer at a substantially same layer as the common electrode 110, and with another sub-layer at a substantially same layer as the pixel electrode 90.

It is further noted that the at least one wiring 40 can be configured to be at a substantially same layer as the source electrode 804 and the drain electrode 805, or configured to be at a substantially same layer as the gate electrode 801. Alternatively, each wiring 40 can include two layers, with one layer at a substantially same layer as the source electrode 804 and the drain electrode 805, and with another layer at a substantially same layer as the gate electrode 801.

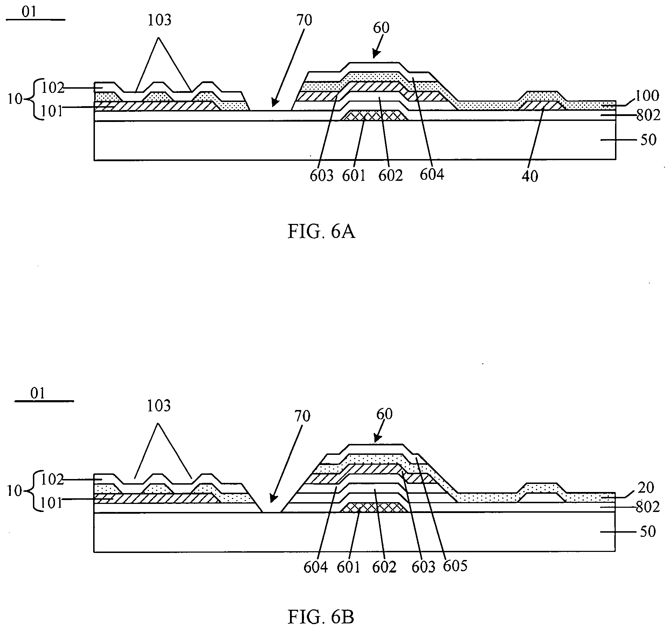

FIG. 6A and FIG. 6B illustrated a non-display area of a fifth embodiment and a sixth embodiment of the display substrate, respectively. The fifth and sixth embodiments are not according to the invention.

According to the fifth embodiment of the display substrate 01 as shown in FIG. 6A, the depression 70 can be configured such that a bottom surface (i.e., a bottom surface) thereof is at a substantially same plane as an upper surface of the gate insulating layer 802.

According to the sixth embodiment of the display substrate 01 as shown in FIG. 6B, the depression 70 can be configured such that a bottom surface (i.e., a bottom surface) thereof is at a substantially same plane as an upper surface of the substrate 50.

In other words, in the above two embodiments of the display substrate 01, it is substantially configured such that the upper surface of the gate insulating layer 802 (shown in FIG. 6A) or the substrate 50 (shown in FIG. 6B) can be exposed at the site for the depression 70 to thereby form the depression 70.

In one specific embodiment as an illustrating example, the depression 70 is configured to have the upper surface of the substrate 50 exposed (as illustrated in FIG. 6B), and such a configuration can realize a distance of about 0.8 µm between the bottom surface of the depression 70 and the upper surface of the conductive adhesive coating portions 10.

Such a configuration substantially further increases the distance between the upper surface of the protruding portion 60 and the bottom surface of the depression 70, which in turn can result in a better effect in blocking the conductive adhesive 30 from spreading to the wiring region (i.e., the region having the at least one wirings 40) after the conductive adhesive coating process.

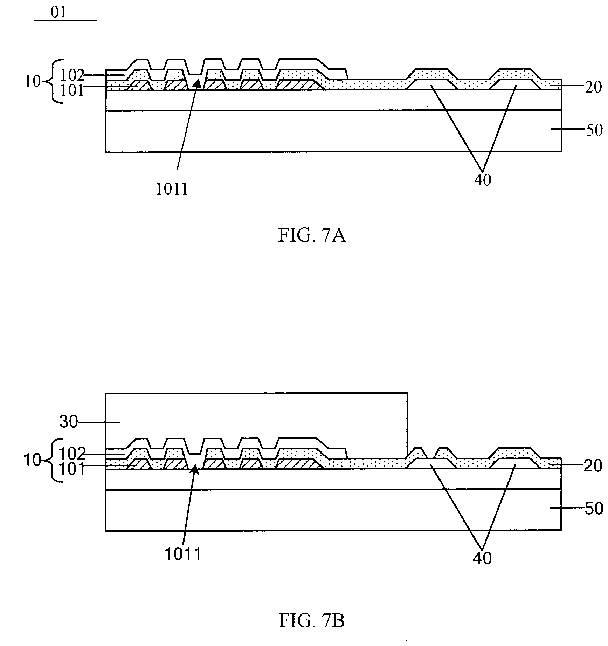

The present disclosure further provides a display substrate 01 according to a seventh embodiment which is not according to the invention. The embodiments derived from the seventh embodiment and mentioned hereinafter are also not according to the invention. As shown in FIG. 7A, this seventh embodiment of the display substrate 01 includes a substrate 50, at least one conductive adhesive coating portion 10, and at least one wiring 40. The at least one conductive adhesive coating portion 10 and the at least one wiring 40 are disposed over the substrate 50.

Each of the at least one conductive adhesive coating portion 10 comprises a metal patterned layer 101 and a transparent conductive patterned layer 102, wherein the transparent conductive patterned layer 102 is disposed over a side of the metal patterned layer 101 that is farther away from the substrate 50 (i.e., the metal patterned layer 101 is between the substrate 50 and the transparent conductive patterned layer 102).

As illustrated in FIG. 7A and FIG. 8, the metal patterned layer 101 is configured to include a at least one first opening 1011. The at least one first opening 1011 take a shape of strips and are spaced apart from one another, and are configured such that each opening 1011 can have an extending direction substantially in parallel to one of the at least one wiring 40 that is closest thereto. In a preferred embodiment as illustrated in FIG. 8, the plurality of the first openings take a shape of straight stripes and are evenly spaced apart from one another. It is noted that at least one first opening 1011 may not be spaced apart but may be connected with each other according to some embodiments.

As shown in FIG. 7B, if rupture and/or perforation occurs in the passivation layer 20 after the conductive adhesive coating process, because the at least one first opening 1011 can allow the conductive adhesive 30 to flow along the extending direction of the at least one first opening 1011, it increases the level of difficulty for the conductive adhesive 30 to spread to the region having the at least one wirings 40 (i.e. the wiring region) to cause electrical connection with the at least one wiring 40 through the ruptures and/or the perforations in the passivation layer 20.

It is noted that the at least one first opening 1011 can take various different shapes, such as straight stripes (as shown in FIG. 8), or curved stripes, etc., and that the at least one first opening 1011 do not necessarily need to be spaced apart, and can be connected to one another at any places, as long as the presence of the at least one first opening 1011 allow the conductive adhesive 30 to flow along the extending direction of the at least one first opening 1011 during the conductive adhesive coating process.

The following are noted for the embodiments of the display substrate 01 as described above.

First, as understood by people of ordinary skill in the field, the conductive adhesive coating process is performed only when the display substrate and the encasing substrate are aligned together for encasing, when the conductive adhesive 30 is applied onto, and to thereby contact with, the at least one conductive adhesive coating portion 10. It is further noted that the at least one conductive adhesive coating portion 10 is electrically coupled to a grounding wiring on the display substrate 01.

Second, the number of the at least one conductive adhesive coating portion 10 can be configured based on a size of the display panel to which the display substrate 01 is applied. If the display panel is small, one conductive adhesive coating portion 10 can be configured; and if the display panel is relatively big, two or more conductive adhesive coating portions 10 can be configured to allow a sufficient grounding for the anti-static sub-portion on the encasing substrate.

Regardless of how many conductive adhesive coating portions 10 are configured, all of the conductive adhesive coating portions 10 are disposed in a non-display area of the substrate 50. All of the at least one wiring 40 as mentioned above are also disposed in the non-display area of the substrate 50.

Third, there are no limitations to the size, number, and shape of the at least one first opening 1011 in the conductive adhesive coating portions 10, which can be configured based on practical needs as long as the configuration allows the conductive adhesive 30 to flow along the extending direction of the at least one first opening 1011 to thereby prevent the conductive adhesive 30 from spreading to the wiring region in the proximity of the conductive adhesive coating portion 10.

Fourth, as for the display substrate 01 as shown in FIG. 7A and FIG. 7B, wherein each conductive adhesive coating portion 10 includes a metal patterned layer 101 and a transparent conductive patterned layer 102, which are electrically connected to each other through the vias in the passivation layer 20, the display substrate 01 serves only as illustrating embodiments and do not impose a limitation to the scope of the disclosure. There are other embodiments based on practical needs.

For example, according to some embodiments of the present disclosure, in addition to the passivation layer 20, at least one insulating layer (such as an interlayer insulating layer or a gate insulating layer) can be arranged between the transparent conductive patterned layer 102 and the metal patterned layer 101. In these embodiments, the transparent conductive patterned layer 102 and the metal patterned layer 101 can be electrically connected through vias that are configured in both the passivation layer 20 and the at least one insulating layer.

In some other embodiments of the present disclosure, a gate insulating layer is arranged between the transparent conductive patterned layer 102 and the metal patterned layer 101. In these embodiments, the transparent conductive patterned layer 102 and the metal patterned layer 101 can be electrically connected through vias that are configured in the gate insulating layer.

In yet some other embodiments of the present disclosure, an interlayer insulating layer is arranged between the transparent conductive patterned layer 102 and the metal patterned layer 101. In these embodiments, the transparent conductive patterned layer 102 and the metal patterned layer 101 can be electrically connected through vias that are configured in the interlayer insulating layer.

It is noted that regardless of a passivation layer 20, a gate insulating layer, or an interlayer insulating layer that is employed in the conductive adhesive coating portion 10 of the display substrate 01, each of the passivation layer 20, the gate insulating layer, and the interlayer insulating layer is essentially and substantially an insulating layer which is formed by coating over the substrate 50.

In the following, technical details of the display substrate 01 are further described by referencing to a configuration where an insulating layer is disposed between a transparent conductive patterned layer 102 and a metal patterned layer 101.

In the aforementioned embodiment of the display substrate 01 as illustrated in FIG. 7B and FIG. 8, the metal patterned layer 101 is provided with at least one first opening 1011 that are spaced apart from one another, which substantially provide a plurality of depression 70s having an extending direction along the at least one first opening 1011 for the conductive adhesive 30 during the conductive adhesive coating process to coat the conductive adhesive 30 onto the conductive adhesive coating portion 10 of the display substrate 01 and to attach the encasing substrate with the display substrate 01 through the conductive adhesive coating portion 01 and the conductive adhesive 30.

As such, after the conductive adhesive coating process, the conductive adhesive 30 can flow along the extending direction of the plurality of depression 70s (i.e. the at least one first opening 1011). In addition, the at least one first opening 1011 is further configured to have the extending direction in parallel to the wirings 40 that are close thereto, which can effectively prevent the conductive adhesive 30 from spreading to the nearby wiring region. Due to these above features, the issue of short circuiting between the conductive adhesive 30 and the wirings 40 that are close thereto can be effectively avoided.

FIG. 9 is a schematic diagram of a non-display area of a display substrate according to an eighth embodiment which is according to the invention. As illustrated in FIG. 9, an insulating layer 120 is sandwiched between the metal patterned layer 101 and the transparent conductive patterned layer 102, and the insulating layer 120 is provided with at least one second opening 1201, which are spaced apart and can take a shape of strips. Similar to the at least one first opening 1101, the at least one second opening may not be spaced apart and may be connected to each other.

The at least one second opening 1201 correspond to the at least one first opening 1101 in a one-to-one relationship, and are configured such that an orthographic projection of the at least one second opening 1201 on the substrate 50 overlaps with an orthographic projection of the at least one first opening 1101 on the substrate 50.

Because the orthographic projection of the at least one second opening 1201 on the substrate 50 and the orthographic projection of the at least one first opening 1101 on the substrate 50 overlap with one another, thus the transparent conductive patterned layer 102 can be electrically connected to the metal patterned layer 101 through the overlapped second openings 1201 and first openings 1101.

Herein the insulating layer 120 can be a passivation layer, a gate insulating layer, or an interlayer insulating layer, depending on the specific design and actual manufacturing process.

In the above-mentioned embodiments of the display substrate 01, at least one second opening 1201 are further configured in the insulating layer 120 at sites of each conductive adhesive coating portion 10. The at least one second opening 1201 correspond to the at least one first opening 1101 in the metal patterned layer 101 in a one-to-one relationship, and are further configured to have their orthographic projection on the substrate 50 overlap with the orthographic projection of the at least one first opening 1101 on the substrate 50.

As such, the depression 70s formed by both the second openings 1201 in the insulating layer 120 and the first openings 1101 in the metal patterned layer 101 can be relatively deep, which further ensures that the conductive adhesive 30 can only flow along the extending direction of the depression 70s (i.e. substantially the extending direction of the first openings 1101 and the second openings 1201), thereby effectively preventing the conductive adhesive 30 from spreading to the nearby wiring regions (i.e., regions having the wirings 40).

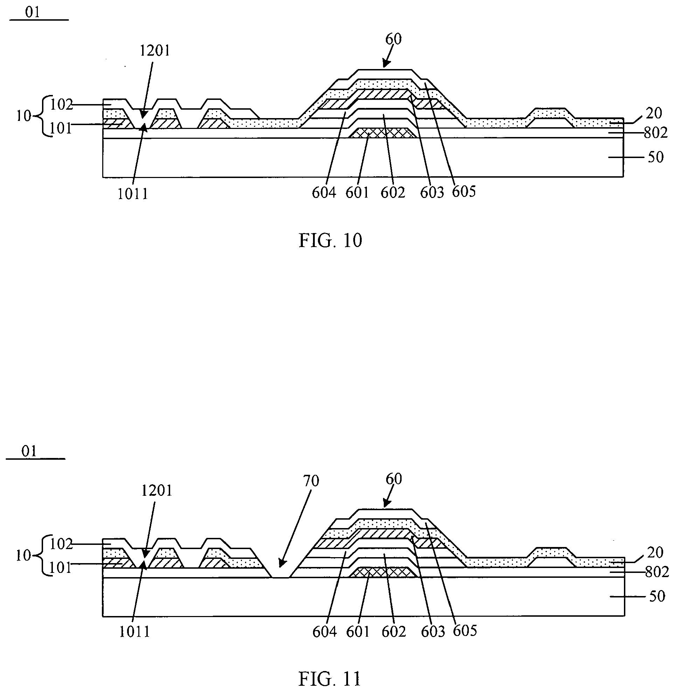

According to a ninth embodiment of the display substrate 01 which is according to the invention and as illustrated in FIG. 10, a protruding portion 60 is disposed between each conductive adhesive coating portion 10 and one of the at least one wiring 40 that is closest to the each conductive adhesive coating portion 10.

The protruding portion 60 is configured to have a larger height than the each conductive adhesive coating portion 10 (i.e. a distance from the upper surface of the protruding portion 60 to the upper surface of the substrate 50 is configured to be larger than a distance from the upper surface of the each conductive adhesive coating portion 10 to the upper surface of the substrate 50). The protruding portion 60 is configured to block the conductive adhesive 30 from spreading to a region having wiring 40.

Herein the structure of the protruding portion 60 can be referenced to the above description.

In the display substrate 01 as described above, by configuring a protruding portion 60 between each conductive adhesive coating portion 10 and one wiring 40 that is closest thereto, it increases the difficulty for the conductive adhesive 30 to spread to the region having the at least one wire 40 after being applied in the conductive adhesive coating process because of a block by the protruding portion 60. As such, the issue of short circuiting between the at least one conductive adhesive coating portion 10 and the at least one wiring 40 in a region in the proximity of the at least one conductive adhesive coating portion 10 can be effectively avoided.

Furthermore, according to a tenth embodiment of the display substrate according to the invention and as illustrated in FIG. 11, the display substrate is further provided with a depression 70 (i.e. a depressing structure), which is arranged between each conductive adhesive coating portion 10 and its corresponding protruding portion 60. The depression 70 is configured such that a bottom surface thereof has a shorter distance to the upper surface of the substrate 50 than an upper surface of each conductive adhesive coating portion 10.

In some preferred embodiments, the bottom surface of the depression 70 and the upper surface of the substrate 50 are at a substantially same plane.

In the tenth embodiments of the display substrate 01 as described above and illustrated in FIG. 11, a depression 70 and a protruding portion 60 are arranged between each conductive adhesive coating portion 10 and one wiring 40 that is closest to the each conductive adhesive coating portion 10, configured such that the depression 70 is between the each conductive adhesive coating portion 10 and the protruding portion 60. This is substantially equivalent to the configuration of a depression 70 and a bulge between the each conductive adhesive coating portion 10 and the one wiring 40 that is closest to the each conductive adhesive coating portion 10.

Because of the relatively large distance between the upper surface of the protruding portion 60 and the bottom surface of the depression 70, it further increases the level of difficulty for the conductive adhesive 30 to go beyond the protruding portion 60 to spread to the region having the wirings 40.

It is of note that the embodiments shown in FIG. 10 and FIG. 11 are illustrated with the passivation layer 20 as the insulating layer 120. The insulating layer 120 can also be a gate insulating layer, or an interlayer insulating layer, depending on the specific design and actual manufacturing process.

As for the metal patterned layer 101, it can be at a substantially same layer as at least one of the gate electrode 801, or the source electrode 804 and the drain electrode 805. As for the transparent conductive patterned layer 102, it can be at a substantially same layer as at least one of the common electrode 110, or the pixel electrode 90. As for the at least one wiring 40, each can be at a substantially same layer as at least one of the gate electrode 801, or the source electrode 804 and the drain electrode 805.

Specifically, the metal patterned layer 101 in the conductive adhesive coating portion 10 can be configured to be at a substantially same layer as the source electrode 804 and the drain electrode 805, or configured to be at a substantially same layer as the gate electrode 801. Alternatively, the metal patterned layer 101 can include two layers, with one layer at a substantially same layer as the source electrode 804 and the drain electrode 805 and another layer at a substantially same layer as the gate electrode 801.

Specifically, the transparent conductive patterned layer 102 in the conductive adhesive coating portion 10 can be configured to be at a substantially same layer as the common electrode 110, or can be configured to be at a substantially same layer as the pixel electrode 90. Alternatively, the transparent conductive patterned layer 102 can include two layers, with one layer at a substantially same layer as the common electrode 110 and another layer at a substantially same layer as the pixel electrode 90.

Specifically, the at least one wiring 40 can be configured to be at a substantially same layer as the source electrode 804 and the drain electrode 805, or configured to be at a substantially same layer as the gate electrode 801. Alternatively, each wiring 40 can include two layers, with one layer at a substantially same layer as the source electrode 804 and the drain electrode 805 and another layer at a substantially same layer as the gate electrode 801.

In another aspect, the disclosure further provides a display panel. As shown in FIG. 12, the display panel includes a display substrate 01 as described above, and an encasing substrate 02. The encasing substrate 02 is provided with a coupling portion (not shown in the drawings), which is electrically connected with at least one conductive adhesive coating portion 10 arranged on the display substrate 01 via the conductive adhesive 30. Herein the coupling portion can include an anti-static sub-portion, which configured to collect and guide out the static electricity that is accumulated in the encasing substrate, but can also include another sub-portion having another functionality.

As for a vehicle-mounted display panel, the environment where the vehicle-mounted display panel is used can easily cause the insulating layer 120 (e.g. the passivation layer 20) that is sandwiched between the metal patterned layer 101 and the transparent conductive patterned layer 102 to subject to ruptures and perforations. Thus according to some embodiments of the present disclosure, the display panel can be a vehicle-mounted display panel.

The display panel as described above has substantially same advantages or favored features as the aforementioned display substrate, which have been detailed above and will not be repeated herein.

According to some embodiments as illustrated in FIG. 12, there are two conductive adhesive coating portions 10, which are disposed at the two ends of the diagonal line of the display substrate 01.

On the one hand, configuration of two conductive adhesive coating portions 10 can guarantee a relatively high anti-static efficiency, whereas the difficulty in arranging the wirings in the display substrate 01 is not increased, compared with a configuration of more than two conductive adhesive coating portions 10. On the other hand, if one conductive adhesive coating portion 10 cannot exert its anti-static function due to some issues, the other conductive adhesive coating portion 10 can still work to exert its anti-static function, thereby resulting in an increased reliability for the display panel.

According to some embodiments, the coupling portion in the encasing substrate 02 can be a transparent conductive film, which is disposed on a side of the encasing substrate 02 that is relatively farther away from the display substrate 01.

As such, there is no need to alter current manufacturing process of the encasing substrate 02 (i.e. a current manufacturing process can still be applied to manufacture the encasing substrate 02), and the process of fabricating the transparent conductive film is relatively simple.

In yet another aspect, the present disclosure provides a method for manufacturing a display substrate. The method includes the steps of:
Providing a substrate; and
Forming at least one conductive adhesive coating portion 10, at least one wiring 40, and at least one protruding portion 60 over a substrate 50, such that one protruding portion 60 is disposed between each conductive adhesive coating portion 10 and one wiring that is closest to the each conductive adhesive coating portion 10.

Herein, it is configured such that a distance of an upper surface of the one protruding portion 60 to an upper surface of the substrate 50 is larger than a distance of an upper surface of the each conductive adhesive coating portion 10 to the upper surface of the substrate 50. Each of the at least one protruding portion 60 is configured to block a conductive adhesive 30 from spreading to a region containing the at least one wiring 40.

As illustrated in FIG. 4A, a thin-film transistor 80 comprises a gate electrode 801, a gate insulating layer 802, an active layer 803, a source electrode 804 and a drain electrode 805, which are consecutively disposed over the substrate 50. The drain electrode 805 is electrically connected with a pixel electrode 90 through at least one via arranged in an interlayer insulating layer 100. The gate insulating layer 802 and the interlayer insulating layer 100 are configured to be coated onto the whole upper surface of the substrate 50.

Each protruding portion 60 includes a plurality of patterned layers, and one or more of the plurality of patterned layers in each protruding portion 60 can be configured to be formed through a one-time patterning process with one or more of the gate electrode 801, the active layer 803, the source electrode 804 and the drain electrode 805, or the pixel electrode 90 in the thin-film transistor 80.

As such, as illustrated in FIG. 4B, in addition to the gate insulating layer 802 and the interlayer insulating layer 100, the protruding portion 60 can further include a first patterned layer 601 that is formed by a substantially same patterning process as the gate electrode 801, a second patterned layer 602 that is formed by a substantially same patterning process as the active layer 803, a third patterned layer 603 that is formed by a substantially same patterning process as the source electrode 804 and the drain electrode 805, a fourth patterned layer 604 that is formed by a substantially same patterning process as the pixel electrode 90.

As mentioned above in some embodiments of the display substrate and according to the invention, each of the at least one conductive adhesive coating portion 10 includes a metal patterned layer 101 and a transparent conductive patterned layer 102. Therefore, according to some embodiments of the method, the metal patterned layer 101 is formed by a substantially same patterning process as the source electrode 804 and the drain electrode 805; the transparent conductive patterned layer 102 is formed by a substantially same patterning process as the pixel electrode 90; and each of the at least one wiring 40 is formed by a substantially same patterning process as the source electrode 804 and the drain electrode 805 of each thin-film transistor 80.

As has been noted for the metal patterned layer 101 in the conductive adhesive coating portion 10, the metal patterned layer 101 is configured to be at a substantially same layer as the source electrode 804 and the drain electrode 805, or is configured to be at a substantially same layer as the gate electrode 801, or alternatively can include two sub-layers, with a first sub-layer at a substantially same layer as the source electrode 804 and the drain electrode 805 and as a second sub-layer at a substantially same layer as the gate electrode 801.

As such, when forming the at least one conductive adhesive coating portion 10, the metal patterned layer 101 can be formed by a substantially same patterning process as the source electrode 804 and the drain electrode 805, or as the gate electrode 801, or alternatively, by forming the first sub-layer via a substantially same patterning process as the source electrode 804 and the drain electrode 805, and forming the second sub-layer via a substantially same patterning process as the gate electrode 801.

As also has been noted for the transparent conductive patterned layer 102 in the conductive adhesive coating portion 10, the transparent conductive patterned layer 102 can be configured to be at a substantially same layer as the common electrode 110, or can be configured to be at a substantially same layer as the pixel electrode 90, or alternatively can include two sub-layers, with one sub-layer at a substantially same layer as the common electrode 110, and with another sub-layer at a substantially same layer as the pixel electrode 90.

As such, when forming the at least one conductive adhesive coating portion 10, the transparent conductive patterned layer 102 can be formed by a substantially same patterning process as the common electrode 110, or as the pixel electrode 90, or alternatively, by forming the one sub-layer via a substantially same patterning process as the common electrode 110, and forming the another sub-layer via a substantially same patterning process as the pixel electrode 90.

As also has been noted for the at least one wiring 40, each of the at least one wiring 40 can be configured to be at a substantially same layer as the source electrode 804 and the drain electrode 805, or can be configured to be at a substantially same layer as the gate electrode 801, or alternatively can include two sub-layers, with one sub-layer at a substantially same layer as the source electrode 804 and the drain electrode 805, and with another sub-layer at a substantially same layer as the gate electrode 801.

As such, when forming the at least one wiring 40, the metal patterned layer 101 can be formed by a substantially same patterning process as the source electrode 804 and the drain electrode 805, or as the gate electrode 801, or alternatively, by forming the one sub-layer via a substantially same patterning process as the source electrode 804 and the drain electrode 805, and forming the another sub-layer via a substantially same patterning process as the gate electrode 801.

According to some embodiments as illustrated in FIG. 5A, the method for manufacturing a display substrate further includes:
Forming at least one common electrode 110 and a passivation layer 20.

As such, the protruding portion 60 can include a plurality of patterned layers, and it is configured such that one or more of the plurality of patterned layers in the protruding portion 60 are configured to be formed by a substantially same patterning process as the gate electrode 801, the active layer 803, the source electrode 804 and the drain electrode 805, the pixel electrode 90, or the at least one common electrode 110.

In the display substrate 01 as described above, because the gate insulating layer 802 of the thin-film transistor and the passivation layer 20 are coated over the whole upper surface of the substrate 50, the protruding portion 60 can further include the gate insulating layer 802 and the passivation layer 20.

As such, during the formation of the thin-film transistor 80, the pixel electrode 90, the common electrode 110, and the passivation layer 20, one or more of the plurality of patterned layers in the protruding portion 60 can also be formed at the same time.

In the embodiments of the display substrate as illustrated in FIG. 5B, the protruding portion 60 includes a first patterned layer 601, a second patterned layer 602, a third patterned layer 603, a fourth patterned layer 604, and a fifth patterned layer 605.

In the method for manufacturing the display substrate as illustrated in FIG. 5B, the first patterned layer 601 can be formed by a substantially same patterning process as the gate electrode 801, the second patterned layer 602 can be formed by a substantially same patterning process as the active layer 803, the third patterned layer 603 can be formed by a substantially same patterning process as the source electrode 804 and the drain electrode 805, the fourth patterned layer 604 can be formed by a substantially same patterning process as the pixel electrode 90, and the fifth patterned layer 605 can be formed by a substantially same patterning process as the at least one common electrode 110.

As such, there is no need to add extra patterning processes in the manufacturing of the display substrate, and the height of the protruding portion 60 can be increased as well (In one illustrating example, the protruding portion 60 having the above mentioned configuration can have a height difference of more than 1.9 µm between the protruding portion 60 and the conductive adhesive coating portions 10).

In some embodiments of the display substrate as illustrated in FIG. 6A and FIG. 6B, there is a depression 70 between each conductive adhesive coating portion 10 and a corresponding protruding portion 60 (i.e., the protruding portion 60 that is configured between the each conductive adhesive coating portion 10 and the wiring 40 that is closest thereto).

As such, according to some embodiments of the disclosure, the method can further include:
Forming a depression 70 between each conductive adhesive coating portion 10 and a corresponding protruding portion 60.

Herein the depression 70 can be configured such that a bottom surface thereof is at a substantially same plane as an upper surface of the gate insulating layer 802, as shown in FIG. 6A, or that the bottom surface thereof is at a substantially same plane as an upper surface of the substrate 50, as illustrated in FIG. 6B. In other words, in the above two embodiments of the display substrate 01, it is substantially configured such that the upper surface of the gate insulating layer 802 (shown in FIG. 6A) or the substrate 50 (shown in FIG. 6B) can be exposed at the site for the depression 70 to thereby form the depression 70.

In one specific embodiment, the depression 70 is configured to have the upper surface of the substrate 50 exposed (as illustrated in FIG. 6B), and such a configuration can realize a distance of about 0.8 µm between the bottom surface of the depression 70 and the upper surface of the conductive adhesive coating portions 10. Such a configuration substantially further increases the distance between the upper surface of the protruding portion 60 and the bottom surface of the depression 70, which in turn can result in a better effect in blocking the conductive adhesive 30 from spreading to the wiring region after the conductive adhesive coating process.

There is no limitation to the type of the thin-film transistor 80, which can be an amorphous silicon thin-film transistor, a metal oxide thin-film transistor, a polycrystalline silicon thin-film transistor, or an organic thin-film transistor, etc. In addition, there is no limitation to the configuration of the film transistor 80, which can be of a bottom-gate type or can be of a top-gate type. Only a bottom-gate thin-film transistor is shown in FIG. 4A as an illustrated example.

In the method for manufacturing a display substrate as described above, by configuring a protruding portion 60 between each conductive adhesive coating portion 10 and one wiring 40 that is closest thereto, it increases the difficulty for the conductive adhesive 30 to spread to the wiring region (i.e. the region having the at least one wire 40) after being applied in a conductive adhesive coating process because of the block by the protruding portion 60. As such, the issue of short circuiting between the at least one conductive adhesive coating portion 10 and the at least one wiring 40 in a region in the proximity of the at least one conductive adhesive coating portion 10 can be effectively avoided.

Additionally, because the protruding portions 60 can be formed at the same time when each thin-film transistor 80 and each pixel electrode 90 are fabricated, the number of patterning processes for the whole manufacturing process of the display substrate do not need to be increased.

Although specific embodiments have been described above in detail, the description is merely for purposes of illustration. It should be appreciated, therefore, that many aspects described above are not intended as required or essential elements unless explicitly stated otherwise.

## Claims

1. A display substrate (01), comprising:
a substrate (50);
a first portion (10) of the display substrate (01), configured to be coated with a conductive adhesive (30) for attachment, and for electric coupling, of the display substrate (01) with a color filter substrate (02);
a display area having a plurality of layers;
a second portion of the display substrate (01), comprising at least one wiring (40); and
a protruding portion (60) of the display substrate (01);
wherein:
the first portion (10), the second portion, and the protruding portion (60) are disposed over an upper surface of the substrate (50);
the protruding portion (60) is disposed between the first portion (10) and the second portion and protrudes in a direction away from the substrate (50), and is configured to prevent the conductive adhesive (30) coated on the first portion (10) from spreading to the second portion;
the protruding portion (60) comprises at least one patterned layer, wherein one or more of the at least one patterned layer is configured to be in a substantially same layer as one or more of the plurality of layers in the display area of the display substrate (01);
the one or more of the at least one patterned layer of the protruding portion (60) is configured to have a substantially same composition as one or more of the plurality of layers in the display area of the display substrate (01);
**characterized in that** an upper surface of the first portion (10) is provided with one or more second depressions, configured such that a bottom surface thereof has a shorter distance to the upper surface of the substrate (50) than the upper surface of the first portion (10) outside the second depressions;
the first portion (10) comprises a metal patterned layer (101), an insulating layer (120), and a transparent conductive patterned layer (102), sequentially disposed over the upper surface of the substrate (50), wherein:
the metal patterned layer (101) is provided with at least one first opening (1011), configured such that an orthographic projection of the at least one first opening (1011) on the substrate (50) is overlapped with an orthographic projection of the one or more second depressions on the substrate (50);
the insulating layer (120) is provided with at least one second opening (1201), configured such that an orthographic projection of the at least one second opening (1201) on the substrate (50) is overlapped with an orthographic projection of the one or more second depressions on the substrate (50);
the metal patterned layer (101) is configured to be at a substantially same layer, and have a substantially same composition, as either or both of a source electrode (804) and a drain electrode (805), or a gate electrode (801) of at least one thin-film transistor (80) in the display substrate (01); and the transparent conductive patterned layer (102) is configured to be at a substantially same layer, and have a substantially same composition, as either or both of at least one pixel electrode (90) or at least one common electrode (110) in the display substrate (01).

2. The display substrate (01) of Claim 1, wherein an upper surface of the protruding portion (60) has a larger distance to the upper surface of the substrate (50) than an upper surface of the first portion (10).

3. The display substrate (01) of Claim 1, wherein one or more first depressions (70) are arranged between the first portion (10) and the protruding portion (60), and are configured such that a bottom surface thereof has a shorter distance to the upper surface of the substrate (50) than the upper surface of the first portion (10);
the one or more first depressions (70) take a shape of strips, extending in a direction substantially parallel to one of the at least one wiring (40) in the second portion that is closest to the first portion (10);
the bottom surface of the one or more first depressions (70) is on a substantially same plane as the upper surface of the substrate (50).

4. The display substrate (01) of Claim 1, wherein the display area comprises at least one thin-film transistor (80) and at least one pixel electrode (90), disposed over the upper surface of the substrate (50), wherein:
the one or more of the at least one patterned layer in the protruding portion (60) is configured to be at a substantially same layer, and have a substantially same composition, as at least one of a gate electrode (801), an active layer (803), or a source electrode (804) and a drain electrode (805), of the at least one thin-film transistor (80), or the at least one pixel electrode (90);
the protruding portion (60) comprises:
a first patterned layer (601) at a substantially same layer, and having a substantially same composition, as the gate electrode (801);
a second patterned layer (602) at a substantially same layer, and having a substantially same composition, as the active layer (803);
a third patterned layer (603) at a substantially same layer, and having a substantially same composition, as the source electrode (804) and the drain electrode (805); and
a fourth patterned layer (604) at a substantially same layer, and having a substantially same composition, as the pixel electrode (90).

5. The display substrate (01) of Claim 1, wherein the display area comprises at least one thin-film transistor (80), at least one pixel electrode (90), at least one common electrode (110), and a passivation layer (20), disposed over the upper surface of the substrate (50), wherein:
the one or more of the at least one patterned layer in the protruding portion (60) is configured to be at a substantially same layer, and have a substantially same composition, as at least one of a gate electrode (801), an active layer (803), or a source electrode (804) and a drain electrode (805), of the at least one thin-film transistor (80), the at least one pixel electrode (90), the at least one common electrode (110), or the passivation layer (20);
the protruding portion (60) comprises:
a first patterned layer (601) at a substantially same layer, and having a substantially same composition, as the gate electrode (801);
a second patterned layer (602) at a substantially same layer, and having a substantially same composition, as the active layer (803);
a third patterned layer (603) at a substantially same layer, and having a substantially same composition, as the source electrode (804) and the drain electrode (805);
a fourth patterned layer (604) at a substantially same layer, and having a substantially same composition, as the pixel electrode (90); and
a fifth patterned layer (605) at a substantially same layer, and having a substantially same composition, as the at least one common electrode (110).

6. The display substrate (01) of Claim 1, wherein the one or more second depressions take a shape of strips, extending in a direction substantially parallel to one of the at least one wiring (40) in the second portion that is closest to the first portion (10).

7. A display panel, comprising:
a display substrate (01) according to any of Claims 1-6; and
a color filter substrate (02);
wherein:
the color filter substrate (02) is assembled with the display substrate (01), and is electrically coupled with the display substrate (01) via the conductive adhesive (30) coated onto the first portion (10) of the display substrate (01).

8. The display panel of Claim 7, wherein the first portion (10) on the display substrate (01) comprises two conductive adhesive (30) coating sub-portions;
the two conductive adhesive (30) coating sub-portions are disposed respectively at two ends of a diagonal line on the display substrate (01).

9. The display panel of Claim 7, wherein the color filter substrate (02) is provided with a coupling portion, configured to be electrically coupled with the first portion (10) on the display substrate (01) via the conductive adhesive (30);
the coupling portion comprises an anti-static sub-portion, wherein the anti-static sub-portion comprises a transparent conductive film, disposed on a side of the color filter substrate (02) far away from the display substrate (01), and the anti-static sub-portion is configured to collect and guide out static electricity that is accumulated in the color filter substrate.

10. The display panel of any one of Claims 7-9, wherein the conductive adhesive (30) is a silver paste.

11. A method for manufacturing a display panel, comprising:
forming a first portion (10) of the display panel, a second portion of the display panel, and a protruding portion (60) of the display panel over an upper surface of a substrate (50), wherein:
forming the first portion (10) comprises forming the first portion (10) at a first location where a conductive adhesive (30) is to be coated for attachment, and for electric coupling, of the display substrate (01) with a color filter substrate (02);
forming the second portion comprises forming at least one wiring (40); and
forming the protruding portion (60) comprises forming the protruding portion (60) at a second location between the first portion (10) and the second portion,
wherein the protruding portion (60) protrudes in a direction away from the substrate, and is configured to prevent the conductive adhesive (30) coated on the first portion (10) from spreading to the second portion;
the protruding portion (60) comprises at least one patterned layer, wherein one or more of the at least one patterned layer is configured to be in a substantially same layer as one or more of a plurality of layers in a display area of the display substrate (01);
the one or more of the at least one patterned layer of the protruding portion (60) is configured to have a substantially same composition as one or more of the plurality of layers in the display area of the display substrate (01);
**characterized in that** an upper surface of the first portion (10) is provided with one or more second depressions, configured such that a bottom surface thereof has a shorter distance to the upper surface of the substrate (50) than the upper surface of the first portion (10) outside the second depressions;
the first portion (10) comprises a metal patterned layer (101), an insulating layer (120), and a transparent conductive patterned layer (102), sequentially disposed over the upper surface of the substrate (50), wherein:
the metal patterned layer (101) is provided with at least one first opening (1011), configured such that an orthographic projection of the at least one first opening (1011) on the substrate (50) is overlapped with an orthographic projection of the one or more second depressions on the substrate (50);
the insulating layer (120) is provided with at least one second opening (1201), configured such that an orthographic projection of the at least one second opening (1201) on the substrate (50) is overlapped with an orthographic projection of the one or more second depressions on the substrate (50);
the metal patterned layer (101) is configured to be at a substantially same layer, and have a substantially same composition, as either or both of a source electrode (804) and a drain electrode (805), or a gate electrode (801) of at least one thin-film transistor (80) in the display substrate (01); and the transparent conductive patterned layer (102) is configured to be at a substantially same layer, and have a substantially same composition, as either or both of at least one pixel electrode (90) or at least one common electrode (110) in the display substrate (01).

## Patentansprüche

1. Anzeigesubstrat (01), umfassend:
ein Substrat (50);
einen ersten Abschnitt (10) des Anzeigesubstrats (01), der dafür eingerichtet ist, mit einem leitfähigen Klebstoff (30) zum Anbringen und zum elektrischen Koppeln des Anzeigesubstrats (01) mit einem Farbfiltersubstrat (02) beschichtet zu werden;
einen Anzeigebereich mit mehreren Schichten;
einen zweiten Abschnitt des Anzeigesubstrats (01), der mindestens eine Verdrahtung (40) umfasst; und
einen vorstehenden Abschnitt (60) des Anzeigesubstrats (01);
wobei:
der erste Abschnitt (10), der zweite Abschnitt und der vorspringende Abschnitt (60) über einer Oberseite des Substrats (50) angeordnet sind;
der vorstehende Abschnitt (60) zwischen dem ersten Abschnitt (10) und dem zweiten Abschnitt angeordnet ist und in einer Richtung von dem Substrat (50) fort vorsteht und dafür eingerichtet ist zu verhindern, dass sich der auf den ersten Abschnitt (10) aufgetragene leitfähige Klebstoff (30) zu dem zweiten Abschnitt ausbreitet;
der vorstehende Abschnitt (60) mindestens eine strukturierte Schicht umfasst, wobei eine oder mehrere der mindestens einen strukturierten Schicht dafür eingerichtet sind, sich in einer im Wesentlichen selben Schicht zu befinden wie eine oder mehrere der mehreren Schichten in dem Anzeigebereich des Anzeigesubstrats (01);
die eine oder die mehreren der mindestens einen strukturierten Schicht des vorstehenden Abschnitts (60) dafür eingerichtet sind, eine im Wesentlichen gleiche Zusammensetzung wie eine oder mehrere der mehreren Schichten in dem Anzeigebereich des Anzeigesubstrats (01) aufzuweisen;
**dadurch gekennzeichnet, dass** eine Oberseite des ersten Abschnitts (10) mit einer oder mehreren zweiten Vertiefungen versehen ist, die so eingerichtet sind, dass ihre Unterseite eine kürzere Distanz zu der Oberseite des Substrats (50) aufweist als die Oberseite des ersten Abschnitts (10) außerhalb der zweiten Vertiefungen;
der erste Abschnitt (10) eine strukturierte Metallschicht (101), eine Isolierschicht (120) und eine transparente, leitfähige strukturierte Schicht (102) umfasst, die nacheinander über der Oberseite des Substrats (50) angeordnet sind, wobei:
die strukturierte Metallschicht (101) mit mindestens einer ersten Öffnung (1011) versehen ist, die so eingerichtet ist, dass sich eine orthografische Projektion der mindestens einen ersten Öffnung (1011) auf dem Substrat (50) mit einer orthografischen Projektion der einen oder mehreren zweiten Vertiefungen auf dem Substrat (50) überlappt;
die Isolierschicht (120) mit mindestens einer zweiten Öffnung (1201) versehen ist, die so eingerichtet ist, dass sich eine orthographische Projektion der mindestens einen zweiten Öffnung (1201) auf dem Substrat (50) mit einer orthographischen Projektion der einen oder mehreren zweiten Vertiefungen auf dem Substrat (50) überlappt;
die strukturierte Metallschicht (101) dafür eingerichtet ist, sich auf einer im Wesentlichen selben Schicht zu befinden und eine im Wesentlichen gleiche Zusammensetzung aufzuweisen wie eine oder beide einer Source-Elektrode (804) und einer Drain-Elektrode (805) oder einer Gate-Elektrode (801) mindestens eines Dünnfilmtransistors (80) in dem Anzeigesubstrat (01); und
die transparente leitfähige strukturierte Schicht (102) dafür eingerichtet ist, sich auf einer im Wesentlichen selben Schicht zu befinden und eine im Wesentlichen gleiche Zusammensetzung aufzuweisen wie eine oder beide von mindestens einer Pixelelektrode (90) oder mindestens einer gemeinsamen Elektrode (110) in dem Anzeigesubstrat (01).

2. Anzeigesubstrat (01) nach Anspruch 1, wobei eine Oberseite des vorstehenden Abschnitts (60) eine größere Distanz zur Oberseite des Substrats (50) aufweist als eine Oberseite des ersten Abschnitts (10).

3. Anzeigesubstrat (01) nach Anspruch 1, wobei eine oder mehrere erste Vertiefungen (70) zwischen dem ersten Abschnitt (10) und dem vorstehenden Abschnitt (60) angeordnet sind und so eingerichtet sind, dass ihre Unterseite eine kürzere Distanz zur Oberseite des Substrats (50) aufweist als die Oberseite des ersten Abschnitts (10);
wobei die eine oder die mehreren ersten Vertiefungen (70) die Form von Streifen annehmen, die sich in einer Richtung im Wesentlichen parallel zu einer der mindestens einen Verdrahtung (40) in dem zweiten Abschnitt, die dem ersten Abschnitt (10) am nächsten liegt, erstrecken;
wobei die Unterseite der einen oder mehreren ersten Vertiefungen (70) auf einer im Wesentlichen selben Ebene liegt wie die Oberseite des Substrats (50).

4. Anzeigesubstrat (01) nach Anspruch 1, wobei der Anzeigebereich mindestens einen Dünnfilmtransistor (80) und mindestens eine Pixelelektrode (90) umfasst, die über der Oberseite des Substrats (50) angeordnet sind, wobei:
die eine oder die mehreren der mindestens einen strukturierten Schicht in dem vorstehenden Abschnitt (60) dafür eingerichtet sind, sich auf einer im Wesentlichen selben Schicht zu befinden und eine im Wesentlichen gleiche Zusammensetzung aufzuweisen wie mindestens eines von einer Gate-Elektrode (801), einer aktiven Schicht (803) oder einer Source-Elektrode (804) und einer Drain-Elektrode (805) des mindestens einen Dünnfilmtransistors (80), oder der mindestens einen Pixelelektrode (90);
der vorstehende Abschnitt (60) umfasst:
eine erste strukturierte Schicht (601) auf einer im Wesentlichen selben Schicht und mit einer im Wesentlichen gleichen Zusammensetzung wie die Gate-Elektrode (801);
eine zweite strukturierte Schicht (602) auf einer im Wesentlichen selben Schicht und mit einer im Wesentlichen gleichen Zusammensetzung wie die aktive Schicht (803);
eine dritte strukturierte Schicht (603) auf einer im Wesentlichen selben Schicht und mit einer im Wesentlichen gleichen Zusammensetzung wie die Source-Elektrode (804) und die Drain-Elektrode (805); und
eine vierte strukturierte Schicht (604) auf einer im Wesentlichen selben Schicht und mit einer im Wesentlichen gleichen Zusammensetzung wie die Pixelelektrode (90).

5. Anzeigesubstrat (01) nach Anspruch 1, wobei der Anzeigebereich mindestens einen Dünnfilmtransistor (80), mindestens eine Pixelelektrode (90), mindestens eine gemeinsame Elektrode (110) und eine Passivierungsschicht (20) umfasst, die über der Oberseite des Substrats (50) angeordnet sind, wobei:
die eine oder die mehreren der mindestens einen strukturierten Schicht in dem vorstehenden Abschnitt (60) dafür eingerichtet sind, sich auf einer im Wesentlichen selben Schicht zu befinden und eine im Wesentlichen gleiche Zusammensetzung aufzuweisen wie mindestens eines von einer Gate-Elektrode (801), einer aktiven Schicht (803) oder einer Source-Elektrode (804) und einer Drain-Elektrode (805) des mindestens einen Dünnfilmtransistors (80), der mindestens einen Pixelelektrode (90), der mindestens einen gemeinsamen Elektrode (110), oder der Passivierungsschicht (20);
der vorstehende Abschnitt (60) umfasst:
eine erste strukturierte Schicht (601) auf einer im Wesentlichen selben Schicht und mit einer im Wesentlichen gleichen Zusammensetzung wie die Gate-Elektrode (801);
eine zweite strukturierte Schicht (602) auf einer im Wesentlichen selben Schicht und mit einer im Wesentlichen gleichen Zusammensetzung wie die aktive Schicht (803);
eine dritte strukturierte Schicht (603) auf einer im Wesentlichen selben Schicht und mit einer im Wesentlichen gleichen Zusammensetzung wie die Source-Elektrode (804) und die Drain-Elektrode (805);
eine vierte strukturierte Schicht (604) auf einer im Wesentlichen selben Schicht und mit einer im Wesentlichen gleichen Zusammensetzung wie die Pixelelektrode (90); und
eine fünfte strukturierte Schicht (605) auf einer im Wesentlichen selben Schicht und mit einer im Wesentlichen gleichen Zusammensetzung wie die mindestens eine gemeinsame Elektrode (110).

6. Anzeigesubstrat (01) nach Anspruch 1, wobei die eine oder die mehreren zweiten Vertiefungen die Form von Streifen annehmen, die sich in einer Richtung im Wesentlichen parallel zu einer der mindestens einen Verdrahtung (40) in dem zweiten Abschnitt, die dem ersten Abschnitt (10) am nächsten liegt, erstrecken.

7. Anzeigetafel, umfassend:
ein Anzeigesubstrat (01) nach einem der Ansprüche 1-6; und
ein Farbfiltersubstrat (02);
wobei:
das Farbfiltersubstrat (02) mit dem Anzeigesubstrat (01) zusammengesetzt ist und mit dem Anzeigesubstrat (01) über den leitfähigen Klebstoff (30), der auf den ersten Abschnitt (10) des Anzeigesubstrats (01) aufgetragen ist, elektrisch gekoppelt ist.

8. Anzeigetafel nach Anspruch 7, wobei der erste Abschnitt (10) auf dem Anzeigesubstrat (01) zwei mit leitfähigem Klebstoff (30) beschichtete Unterabschnitte umfasst;
die zwei mit leitfähigem Klebstoff (30) beschichteten Unterabschnitte jeweils an zwei Enden einer diagonalen Linie auf dem Anzeigesubstrat (01) angeordnet sind.

9. Anzeigetafel nach Anspruch 7, wobei das Farbfiltersubstrat (02) mit einem Kopplungsabschnitt versehen ist, der dafür eingerichtet ist, mit dem ersten Abschnitt (10) auf dem Anzeigesubstrat (01) über den leitfähigen Klebstoff (30) elektrisch gekoppelt zu werden;
wobei der Kopplungsabschnitt einen antistatischen Unterabschnitt umfasst, wobei der antistatische Unterabschnitt einen transparenten leitfähigen Film umfasst, der auf einer Seite des Farbfiltersubstrats (02) in großem Abstand von dem Anzeigesubstrat (01) angeordnet ist, und der antistatische Unterabschnitt dafür eingerichtet ist, statische Elektrizität, die sich in dem Farbfiltersubstrat akkumuliert hat, zu sammeln und abzuleiten.

10. Anzeigetafel nach einem der Ansprüche 7-9, wobei der leitfähige Klebstoff (30) eine Silberpaste ist.

11. Verfahren zur Herstellung einers Anzeigetafel, wobei das Verfahren umfasst:
Bilden eines ersten Abschnitts (10) der Anzeigetafel, eines zweiten Abschnitts der Anzeigetafel und eines vorstehenden Abschnitts (60) der Anzeigetafel über einer Oberseite eines Substrats (50), wobei:
das Bilden des ersten Abschnitts (10) das Bilden des ersten Abschnitts (10) an einer ersten Stelle umfasst, wo ein leitfähiger Klebstoff (30) zum Anbringen und zum elektrischen Koppeln des Anzeigesubstrats (01) mit einem Farbfiltersubstrat (02) aufgetragen werden soll;
das Bilden des zweiten Abschnitts das Bilden mindestens einer Verdrahtung (40) umfasst; und
das Bilden des vorstehenden Abschnitts (60) das Bilden des vorstehenden Abschnitts (60) an einer zweiten Stelle zwischen dem ersten Abschnitt (10) und dem zweiten Abschnitt umfasst,
wobei der vorstehende Abschnitt (60) in einer Richtung von dem Substrat fort vorsteht und dafür eingerichtet ist zu verhindern, dass sich der auf den ersten Abschnitt (10) aufgetragene leitfähige Klebstoff (30) zu dem zweiten Abschnitt ausbreitet;
wobei der vorstehende Abschnitt (60) mindestens eine strukturierte Schicht umfasst, wobei eine oder mehrere der mindestens einen strukturierten Schicht dafür eingerichtet sind, sich in einer im Wesentlichen selben Schicht zu befinden wie eine oder mehrere von mehreren Schichten in einem Anzeigebereich des Anzeigesubstrats (01);
die eine oder die mehreren der mindestens einen strukturierten Schicht des vorstehenden Abschnitts (60) dafür eingerichtet sind, eine im Wesentlichen gleiche Zusammensetzung wie eine oder mehrere der mehreren Schichten in dem Anzeigebereich des Anzeigesubstrats (01) aufzuweisen;
**dadurch gekennzeichnet, dass** eine Oberseite des ersten Abschnitts (10) mit einer oder mehreren zweiten Vertiefungen versehen ist, die so eingerichtet sind, dass ihre Unterseite eine kürzere Distanz zu der Oberseite des Substrats (50) aufweist als die Oberseite des ersten Abschnitts (10) außerhalb der zweiten Vertiefungen;
der erste Abschnitt (10) eine strukturierte Metallschicht (101), eine Isolierschicht (120) und eine transparente, leitfähige strukturierte Schicht (102) umfasst, die nacheinander über der Oberseite des Substrats (50) angeordnet sind, wobei:
die strukturierte Metallschicht (101) mit mindestens einer ersten Öffnung (1011) versehen ist, die so eingerichtet ist, dass sich eine orthografische Projektion der mindestens einen ersten Öffnung (1011) auf dem Substrat (50) mit einer orthografischen Projektion der einen oder mehreren zweiten Vertiefungen auf dem Substrat (50) überlappt;
die Isolierschicht (120) mit mindestens einer zweiten Öffnung (1201) versehen ist, die so eingerichtet ist, dass sich eine orthographische Projektion der mindestens einen zweiten Öffnung (1201) auf dem Substrat (50) mit einer orthographischen Projektion der einen oder mehreren zweiten Vertiefungen auf dem Substrat (50) überlappt;
die strukturierte Metallschicht (101) dafür eingerichtet ist, sich auf einer im Wesentlichen selben Schicht zu befinden und eine im Wesentlichen gleiche Zusammensetzung aufzuweisen wie eine oder beide einer Source-Elektrode (804) und einer Drain-Elektrode (805) oder einer Gate-Elektrode (801) mindestens eines Dünnfilmtransistors (80) in dem Anzeigesubstrat (01); und
die transparente leitfähige strukturierte Schicht (102) dafür eingerichtet ist, sich auf einer im Wesentlichen selben Schicht zu befinden und eine im Wesentlichen gleiche Zusammensetzung aufzuweisen wie eine oder beide von mindestens einer Pixelelektrode (90) oder mindestens einer gemeinsamen Elektrode (110) in dem Anzeigesubstrat (01).

## Revendications

1. Substrat d'affichage (01), comprenant :
un substrat (50) ;
une première partie (10) du substrat d'affichage (01), conçue pour être revêtue d'un adhésif conducteur (30) à des fins de fixation et de couplage électrique du substrat d'affichage (01) à un substrat à filtre coloré (02) ;
une zone d'affichage comportant une pluralité de couches ;
une seconde partie du substrat d'affichage (01) comprenant au moins un câblage (40) ; et
une partie saillante (60) sur le substrat d'affichage (01) ;
dans lequel :
la première partie (10), la seconde partie et la partie saillante (60) sont disposées sur une surface supérieure du substrat (50) ;
la partie saillante (60) est disposée entre la première partie (10) et la seconde partie et fait saillie dans un sens opposé au substrat (50), et est conçue pour empêcher l'adhésif conducteur (30) appliqué sur la première partie (10) de se répandre vers la seconde partie ;
la partie saillante (60) comprend au moins une couche à motif, dans lequel une ou plusieurs couche (s) de l'au moins une couche à motif est ou sont conçue(s) pour se trouver sensiblement dans une même couche qu'une ou plusieurs couche (s) de la pluralité de couches de la zone d'affichage du substrat d'affichage (01) ;
la ou les couche(s) de l'au moins une couche à motif de la partie saillante (60) est ou sont conçue(s) pour avoir sensiblement une même composition qu'une ou plusieurs couche(s) de la pluralité de couches de la zone d'affichage du substrat d'affichage (01) ;
**caractérisé en ce qu'**une surface supérieure de la première partie (10) est pourvue d'une ou de plusieurs seconde(s) dépression(s), conçue(s) de manière qu'une surface inférieure de celle(s)-ci présente une plus courte distance par rapport à la surface supérieure du substrat (50) que la surface supérieure de la première partie (10) à l'extérieur des secondes dépressions ;
la première partie (10) comprend une couche métallique à motif (101), une couche isolante (120) et une couche conductrice transparente à motif (102), disposées successivement sur la surface supérieure du substrat (50),
dans lequel :
la couche métallique à motif (101) est pourvue d'au moins une première ouverture (1011) conçue de manière qu'une projection orthographique de l'au moins une première ouverture (1011) sur le substrat (50) se chevauche avec une projection orthographique de la ou des seconde(s) dépression(s) sur le substrat (50) ;
la couche isolante (120) est pourvue d'au moins une seconde ouverture (1201) conçue de manière qu'une projection orthographique de l'au moins une seconde ouverture (1201) sur le substrat (50) se chevauche avec une projection orthographique de la ou des seconde(s) dépression(s) sur le substrat (50) ;
la couche métallique à motif (101) est conçue pour se trouver sensiblement au niveau d'une même couche et avoir sensiblement une même composition qu'une électrode de source (804) et/ou qu'une électrode de drain (805), ou qu'une électrode de grille (801) d'au moins un transistor en couches minces (80) dans le substrat d'affichage (01) ; et la couche conductrice transparente à motif (102) est conçue pour se trouver sensiblement au niveau d'une même couche et avoir sensiblement une même composition qu'au moins une électrode de pixel (90) et/ou qu'au moins une électrode commune (110) dans le substrat d'affichage (01).

2. Substrat d'affichage (01) selon la revendication 1, dans lequel une surface supérieure de la partie saillante (60) présente une plus longue distance par rapport à la surface supérieure du substrat (50) qu'une surface supérieure de la première partie (10).

3. Substrat d'affichage (01) selon la revendication 1, dans lequel une ou plusieurs première(s) dépression(s) (70) ou est sont agencée (s) entre la première partie (10) et la partie saillante (60), et est ou sont conçue(s) de manière que sa ou leur surface inférieure présente une plus courte distance par rapport à la surface supérieure du substrat (50) que la surface supérieure de la première partie (10) ;
la ou les première(s) dépression(s) (70) revête (nt) une forme de bande(s) s'étendant dans une direction sensiblement parallèle à l'un de l'au moins un câblage (40) dans la seconde partie qui est le plus proche de la première partie (10) ;
la surface inférieure de la ou des première(s) dépression (s) (70) se trouve sensiblement dans un même plan que la surface supérieure du substrat (50).

4. Substrat d'affichage (01) selon la revendication 1, dans lequel la zone d'affichage comprend au moins un transistor en couches minces (80) et au moins une électrode de pixel (90), disposés sur la surface supérieure du substrat (50), dans lequel :
la ou les couche(s) de l'au moins une couche à motif de la partie saillante (60) est ou sont conçue (s) pour se trouver sensiblement au niveau d'une même couche et avoir sensiblement une même composition qu'une électrode de grille (801) et/ou qu'une couche active (803) et/ou qu'une électrode de source (804) et/ou qu'une électrode de drain (805), de l'au moins un transistor en couches minces (80), et/ou que l'au moins une électrode de pixel (90) ;
la partie saillante (60) comprend :
une première couche à motif (601) sensiblement au niveau d'une même couche et ayant sensiblement une même composition que l'électrode de grille (801) ;
une deuxième couche à motif (602) sensiblement au niveau d'une même couche et ayant sensiblement une même composition que la couche active (803) ;
une troisième couche à motif (603) sensiblement au niveau d'une même couche et ayant sensiblement une même composition que l'électrode de source (804) et l'électrode de drain (805) ; et
une quatrième couche à motif (604) sensiblement au niveau d'une même couche et ayant sensiblement une même composition que l'électrode de pixel (90).

5. Substrat d'affichage (01) selon la revendication 1, dans lequel la zone d'affichage comprend au moins un transistor en couches minces (80), au moins une électrode de pixel (90), au moins une électrode commune (110), et une couche de passivation (20), disposés sur la surface supérieure du substrat (50), dans lequel :
la ou les couche(s) de l'au moins une couche à motif de la partie saillante (60) est ou sont conçue (s) pour se trouver sensiblement au niveau d'une même couche et avoir sensiblement une même composition qu'une électrode de grille (801) et/ou qu'une couche active (803) et/ou qu'une électrode de source (804) et/ou qu'une électrode de drain (805), de l'au moins un transistor en couches minces (80), et/ou que l'au moins une électrode de pixel (90) et/ou que l'au moins une électrode commune (110) et/ou que la couche de passivation (20) ;
la partie saillante (60) comprend :
une première couche à motif (601) sensiblement au niveau d'une même couche et ayant sensiblement une même composition que l'électrode de grille (801) ;
une deuxième couche à motif (602) sensiblement au niveau d'une même couche et ayant sensiblement la même composition que l'électrode active (803) ;
une troisième couche à motif (603) sensiblement au niveau d'une même couche et ayant sensiblement une même composition que l'électrode de source (804) et l'électrode de drain (805) ;
une quatrième couche à motif (604) sensiblement au niveau d'une même couche et ayant sensiblement une même composition que l'électrode de pixel (90) ; et
une cinquième couche à motif (605) sensiblement au niveau d'une même couche et ayant sensiblement une même composition que l'au moins une électrode commune (110).

6. Substrat d'affichage (01) selon la revendication 1, dans lequel la ou les seconde(s) dépression(s) revête(nt) une forme de bande(s) s'étendant dans une direction sensiblement parallèle à l'un de l'au moins un câblage (40) dans la seconde partie qui est le plus proche de la première partie (10).

7. Panneau d'affichage comprenant :
un substrat d'affichage (01) selon l'une quelconque des revendications 1 à 6 ; et
un substrat à filtre coloré (02) ;
dans lequel :
le substrat à filtre coloré (02) est assemblé au substrat d'affichage (01) et est électriquement couplé au substrat d'affichage (01) par le biais de l'adhésif conducteur (30) appliqué sur la première partie (10) du substrat d'affichage (01).

8. Panneau d'affichage selon la revendication 7, dans lequel la première partie (10) du substrat d'affichage (01) comprend deux parties secondaires à revêtement d'adhésif conducteur (30) ;
les deux parties secondaires à revêtement d'adhésif conducteur (30) sont disposées respectivement aux deux extrémités d'une ligne diagonale sur le substrat d'affichage (01).

9. Panneau d'affichage selon la revendication 7, dans lequel le substrat à filtre coloré (02) est pourvu d'une partie de couplage, conçue pour être électriquement couplée à la première partie (10) du substrat d'affichage (01) par le biais de l'adhésif conducteur (30) ;
la partie de couplage comprend une partie secondaire antistatique, dans lequel la partie secondaire antistatique comprend un film conducteur transparent, disposé sur un côté du substrat à filtre coloré (02) à distance du substrat d'affichage (01), et la partie secondaire antistatique est conçue pour capter et guider vers l'extérieur l'électricité statique qui s'est accumulée dans le substrat à filtre coloré.

10. Panneau d'affichage selon l'une quelconque des revendications 7 à 9, dans lequel l'adhésif conducteur (30) est une pâte d'argent.

11. Procédé de fabrication d'un panneau d'affichage, comprenant les étapes suivantes :
former une première partie (10) du panneau d'affichage, une seconde partie du panneau d'affichage, et une partie saillante (60) du panneau d'affichage sur une surface supérieure d'un substrat (50), dans lequel :
la formation de la première partie (10) comprend la formation de la première partie (10) à un premier emplacement où doit être appliqué un adhésif conducteur (30) à des fins de fixation et de couplage électrique du substrat d'affichage (01) à un substrat à filtre coloré (02) ;
la formation de la seconde partie comprend la formation d'au moins un câblage (40) ; et
la formation de la partie saillante (60) comprend la formation de la partie saillante (60) à un second emplacement situé entre la première partie (10) et la seconde partie,
dans lequel la partie saillante (60) fait saillie dans un sens opposé au substrat, et est conçue pour empêcher l'adhésif conducteur (30) appliqué sur la première partie (10) de se répandre vers la seconde partie ;
la partie saillante (60) comprend au moins une couche à motif, dans lequel une ou plusieurs couche (s) de l'au moins une couche à motif est ou sont conçue(s) pour se trouver sensiblement dans une même couche qu'une ou plusieurs couche (s) d'une pluralité de couches d'une zone d'affichage du substrat d'affichage (01) ;
la ou les couche(s) de l'au moins une couche à motif de la partie saillante (60) est ou sont conçue(s) pour avoir sensiblement une même composition qu'une ou plusieurs couche(s) de la pluralité de couches de la zone d'affichage du substrat d'affichage (01) ;
**caractérisé en ce qu'**une surface supérieure de la première partie (10) est pourvue d'une ou de plusieurs seconde(s) dépression(s), conçue(s) de manière qu'une surface inférieure de celle(s)-ci présente une plus courte distance par rapport à la surface supérieure du substrat (50) que la surface supérieure de la première partie (10) à l'extérieur des secondes dépressions ;
la première partie (10) comprend une couche métallique à motif (101), une couche isolante (120) et une couche conductrice transparente à motif (102), disposées successivement sur la surface supérieure du substrat (50),
dans lequel :
la couche métallique à motif (101) est pourvue d'au moins une première ouverture (1011) conçue de manière qu'une projection orthographique de l'au moins une première ouverture (1011) sur le substrat (50) se chevauche avec une projection orthographique de la ou des seconde(s) dépression(s) sur le substrat (50) ;
la couche isolante (120) est pourvue d'au moins une seconde ouverture (1201) conçue de manière qu'une projection orthographique de l'au moins une seconde ouverture (1201) sur le substrat (50) se chevauche avec une projection orthographique de la ou des seconde(s) dépression(s) sur le substrat (50) ;
la couche métallique à motif (101) est conçue pour se trouver sensiblement au niveau d'une même couche et avoir sensiblement une même composition qu'une électrode de source (804) et/ou qu'une électrode de drain (805), ou qu'une électrode de grille (801) d'au moins un transistor en couches minces (80) dans le substrat d'affichage (01) ; et la couche conductrice transparente à motif (102) est conçue pour se trouver sensiblement au niveau d'une même couche et avoir sensiblement une même composition qu'au moins une électrode de pixel (90) et/ou qu'au moins une électrode commune (110) dans le substrat d'affichage (01).
